(19) Europäisches Patentamt
European Patent Office
Office européen des brevets

(11) EP 4 808 194 A1

(12) **EUROPEAN PATENT APPLICATION**
published in accordance with Art. 153(4) EPC

(43) Date of publication:
**16.09.2026 Bulletin 2026/38**

(21) Application number: **25774705.5**

(22) Date of filing: **21.03.2025**

(51) International Patent Classification (IPC):
***H04W 24/08*** *(2009.01)* ***H04B 17/309*** *(2015.01)*
***H04L 41/16*** *(2022.01)* ***G06N 20/00*** *(2019.01)*
***H04W 8/24*** *(2009.01)* ***H04W 52/02*** *(2009.01)*

(52) Cooperative Patent Classification (CPC):
**G06N 20/00; H04B 17/309; H04L 41/16; H04W 8/24; H04W 24/08; H04W 52/02**

(86) International application number:
**PCT/KR2025/095054**

(87) International publication number:
**WO 2025/198395 (25.09.2025 Gazette 2025/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.03.2024 KR 20240039974**

(71) Applicant: **Samsung Electronics Co., Ltd.**
**Suwon-si, Gyeonggi-do 16677 (KR)**

(72) Inventors:
- **JEONG, Seungbeom**
  **Suwon-si, Gyeonggi-do 16677 (KR)**
- **KIM, Sangbum**
  **Suwon-si, Gyeonggi-do 16677 (KR)**
- **BAEK, Sangkyu**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) METHOD AND DEVICE FOR REDUCING POWER CONSUMPTION OF UE IN WIRELESS COMMUNICATION SYSTEM

(57) The present disclosure relates to a 5G or 6G communication system for supporting a higher data transmission rate than a 4G communication system such as LTE. An operation method of a UE according to an embodiment of the present disclosure includes the steps of: receiving, from a base station, configuration information related to RRM measurement relaxation; using an AI/ML model to determine whether an RRM measurement relaxation condition is satisfied on the basis of the configuration information related to the RRM measurement relaxation; and performing relaxed RRM measurement or unrelaxed (normal) RRM measurement on the basis of the determination.

FIG. 1G

UE
gNB
1g-05
SIB (Relaxation criteria + Allow prediction based RRM Relaxation)
1g-10
Camp on the cell while RRC_IDLE or RRC_INACTIVE
1g-15
Execute AI/ML model to derive predicted future cell measurement result
1g-20
Determine whether relaxation criteria are fulfilled, based on predicted cell measurement result
1g-25
When relaxation criteria are fulfilled, terminal performs relaxed RRM measurement; when relaxation criteria are not fulfilled, terminal performs normal RRM measurement

EP 4 808 194 A1

## Description

### Technical Field

The present disclosure relates to operations of a terminal and a base station in a wireless communication system, and more particularly, to a method and apparatus for an artificial intelligence/machine learning (AI/ML)-based terminal to perform a relaxed radio resource measurement (RRM) operation in a next-generation mobile communication system.

### Background Art

Over the course of successive wireless communication generations, technologies have been developed primarily for human-centric services, such as voice, multimedia, and data services. Following the commercialization of 5th Generation (5G) communication systems, a rapidly growing number of connected devices are expected to be connected to communication networks. Examples of objects connected to a network may include vehicles, robots, drones, home appliances, displays, smart sensors installed in various infrastructure, construction machinery, and factory equipment. Mobile devices are expected to evolve into various form factors, such as augmented reality glasses, virtual reality headsets, or holographic devices. In the era of 6th Generation (6G) communications, efforts are underway to develop advanced 6G communication systems that connect hundreds of billions of devices and objects to provide diverse services. For this reason, 6G communication systems are referred to as Beyond-5G systems.

The 6G communication system, which is expected to be realized around 2030, is projected to achieve a maximum transmission rate of terabit per second (Tbps) (i.e., 1,000 gigabits per second (Gbps)) and a radio latency of 100 microseconds (μsec). That is, compared to 5G communication systems, the transmission rate of 6G communication systems is 50 times faster and the radio latency is reduced to one-tenth.

To achieve such high data transmission rates and ultra-low latency, implementation of 6G communication systems in the terahertz band (e.g., from 95 gigahertz (95 GHz) to 3 terahertz (3 THz)) has been considered. In the terahertz band, due to more severe path loss and atmospheric absorption compared to the millimeter-wave (mmWave) band introduced in 5G, technologies capable of ensuring signal reach, i.e., coverage, are expected to become increasingly important. As key technologies for ensuring coverage, radio-frequency (RF) components, antennas, novel waveforms with better coverage performance than orthogonal frequency-division multiplexing (OFDM), and multi-antenna transmission technologies such as beamforming, massive multiple-input and multiple-output (massive MIMO), full-dimensional MIMO (FD-MIMO), array antennas, or large-scale antennas, need to be developed. In addition, there has been an ongoing discussion on new techniques for improving the coverage of terahertz-band signals, such as metamaterial-based lenses and antennas, high-dimensional spatial multiplexing technologies using orbital angular momentum (OAM), or reconfigurable intelligent surface (RIS).

Moreover, in order to improve frequency efficiencies and system networks, the following technologies have been developed for 6G communication systems: a full duplex technology for enabling an uplink and a downlink to use the same frequency resource at the same time; a network technology for utilizing satellites, high-altitude platform stations (HAPS), and the like in an integrated manner; a network structure innovation technology for supporting mobile base stations and the like and enabling network operation optimization and automation and the like; a dynamic spectrum sharing technology though collision avoidance based on spectrum use prediction, an artificial intelligence (AI)-based communication technology for implementing system optimization by using AI from the design phase and internalizing end-to-end AI support functions; and a next-generation distributed computing technology for implementing a service having a complexity that exceeds the limit of terminal computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems, which covers both connections between objects and connections between humans and objects. In detail, it is expected that services such as truly immersive extended reality (XR), high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

### Disclosure of Invention

**Solution to Problem**

According to an embodiment, provided is a method performed by a user equipment (UE) in a wireless communication system. The method performed by the UE may include: obtaining, from a base station, configuration information related to artificial intelligence/machine learning (AI/ML)-based radio resource measurement (RRM) relaxation; obtaining, by using AI/ML, information including a predicted cell measurement result; determining, based on the information including the predicted cell measurement result, whether at least one RRM relaxation criterion is fulfilled; and performing, based on the determining, relaxed RRM measurement or normal RRM measurement.

According to an embodiment, the method performed by the UE may further include receiving, from the base station, information indicating whether performing the AI/ML-based RRM relaxation is allowed.

According to an embodiment, the method performed by the UE may further include: obtaining, by using the AI/ML, parameters associated with an RRM relaxation criterion or the RRM relaxation criterion itself; and determining, based on the obtained parameters associated with the RRM relaxation criterion or the obtained RRM relaxation criterion itself, whether to perform relaxed RRM measurement or normal RRM measurement.

According to an embodiment, the parameters associated with the RRM relaxation criterion may include at least one of: parameters indicating a measurement-related threshold for a serving cell; or parameters included in the configuration information related to the AI/ML-based RRM.

According to an embodiment, the method performed by the UE may further include: obtaining, by using the AI/ML, information indicating whether to perform RRM relaxation; and performing relaxed RRM measurement or normal RRM measurement based on the obtained information indicating whether to perform the RRM relaxation.

According to an embodiment, the method performed by the UE may further include: obtaining, by using the AI/ML, information related to an RRM relaxation method; performing, in response to successfully obtaining the information related to the RRM relaxation method, relaxed RRM measurement based on the obtained information related to the RRM relaxation method; and performing, in response to failing to obtain the information related to the RRM relaxation method, normal RRM measurement. According to an embodiment, the information related to the RRM relaxation method may include at least one of information about a measurement period, information about a measurement frequency, or information about a relaxation activation time interval.

According to an embodiment, the UE may be in an inactive state or an idle state. In this case, according to an embodiment, the obtaining of the configuration information related to the AI/ML-based RRM relaxation from the base station may include obtaining, from the base station, system information including the configuration information related to the AI/ML-based RRM relaxation.

According to an embodiment, the UE may be in a connected state. In this case, according to an embodiment, the obtaining of the configuration information related to the AI/ML-based RRM relaxation from the base station may further include: transmitting, to the base station, UE capability information including information about a capability related to the AL/ML-based RRM relaxation; and receiving, from the base station, a radio resource control (RRC) reconfiguration message including the configuration information related to the AI/ML-based RRM relaxation.

According to an embodiment, the method performed by the UE may further include, in case of performing relaxed RRM measurement, transmitting, to the base station, information indicating that relaxed RRM measurement has been performed, through a measurement report, a radio link failure (RLF) report, or a handover failure (HOF) report.

According to an embodiment, information related to an RRM relaxation method to be applied when performing relaxed RRM measurement may be determined based on which of the at least one RRM relaxation criterion is fulfilled. The information related to the RRM relaxation method may include at least one of information about a measurement period, information about a measurement frequency, or information about a relaxation activation time interval.

According to an embodiment, when obtaining information by using the AI/ML, accuracy of the obtained information may be derived. In this case, according to an embodiment, the method performed by the UE may further include, in response to the accuracy exceeding a particular threshold, performing relaxed RRM measurement by using the information obtained by using the AI/ML.

According to an embodiment, provided is a UE in a wireless communication system. The UE may include a memory storing one or more instructions and at least one processor. The at least one processor may execute the one or more instructions stored in the memory to: obtain, from a base station, configuration information related to AI/ML-based RRM relaxation; obtain, by using AI/ML, information including a predicted cell measurement result; determine, based on the information including the predicted cell measurement result, whether at least one RRM relaxation criterion is fulfilled; and perform, based on the determining, relaxed RRM measurement or normal RRM measurement.

According to an embodiment, the at least one processor may execute the one or more instructions stored in the memory to receive, from the base station, information indicating whether performing the AI/ML-based RRM relaxation is allowed.

According to an embodiment, the at least one processor may execute the one or more instructions stored in the memory to: obtain, by using the AI/ML, parameters associated with an RRM relaxation criterion or the RRM relaxation

criterion itself; and determine, based on the obtained parameters associated with the RRM relaxation criterion or the obtained RRM relaxation criterion itself, whether to perform relaxed RRM measurement or normal RRM measurement.

According to an embodiment, the at least one processor may execute the one or more instructions stored in the memory to: obtain, by using the AI/ML, information indicating whether to perform RRM relaxation; and perform relaxed RRM measurement or normal RRM measurement based on the obtained information indicating whether to perform the RRM relaxation.

According to an embodiment, the at least one processor may execute the one or more instructions stored in the memory to: obtain, by using the AI/ML, information related to an RRM relaxation method; perform, in response to successfully obtaining the information related to the RRM relaxation method, relaxed RRM measurement based on the obtained information related to the RRM relaxation method; and perform, in response to failing to obtain the information related to the RRM relaxation method, normal RRM measurement. The information related to the RRM relaxation method may include at least one of information about a measurement period, information about a measurement frequency, or information about a relaxation activation time interval.

According to an embodiment, the UE may be in an inactive state or an idle state. In this case, the at least one processor may execute the one or more instructions stored in the memory to obtain, from the base station, system information including the configuration information related to the AI/ML-based RRM relaxation.

According to an embodiment, the UE may be in a connected state. In this case, the at least one processor may execute the one or more instructions stored in the memory to: transmit, to the base station, UE capability information including information about a capability related to the AL/ML-based RRM relaxation; and receive, from the base station, an RRC reconfiguration message including the configuration information related to the AI/ML-based RRM relaxation.

According to an embodiment, provided is a method performed by a base station in a wireless communication system. The method performed by the base station may include: broadcasting, to a UE, configuration information related to AI/ML-based RRM relaxation through system information, or transmitting the configuration information to the UE through an RRC reconfiguration message; and receiving, from the UE, at least one of: information including a cell measurement result predicted by using the AI/ML; parameters associated with an RRM relaxation criterion predicted by using the AI/ML; or information indicating that relaxed RRM measurement has been performed.

According to an embodiment, provided is a base station in a wireless communication system. The base station may include a memory storing one or more instructions and at least one processor. The at least one processor may execute the one or more instructions stored in the memory to: broadcast, to a UE, configuration information related to AI/ML-based RRM relaxation through system information, or transmit the configuration information to the UE through an RRC reconfiguration message; and receive, from the UE, at least one of: information including a cell measurement result predicted by using the AI/ML; parameters associated with an RRM relaxation criterion predicted by using the AI/ML; or information indicating that relaxed RRM measurement has been performed.

## Brief Description of Drawings

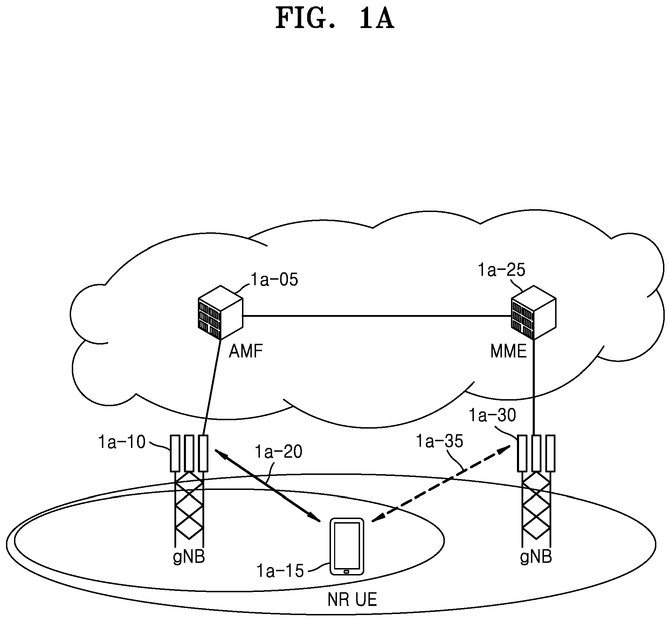

FIG. 1A is a diagram illustrating a structure of a next-generation mobile communication system according to an embodiment of the present disclosure.

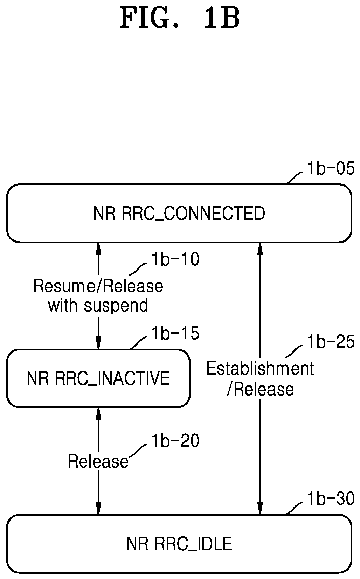

FIG. 1B is a diagram illustrating radio access state transitions of a terminal in a next-generation mobile communication system, according to an embodiment of the present disclosure.

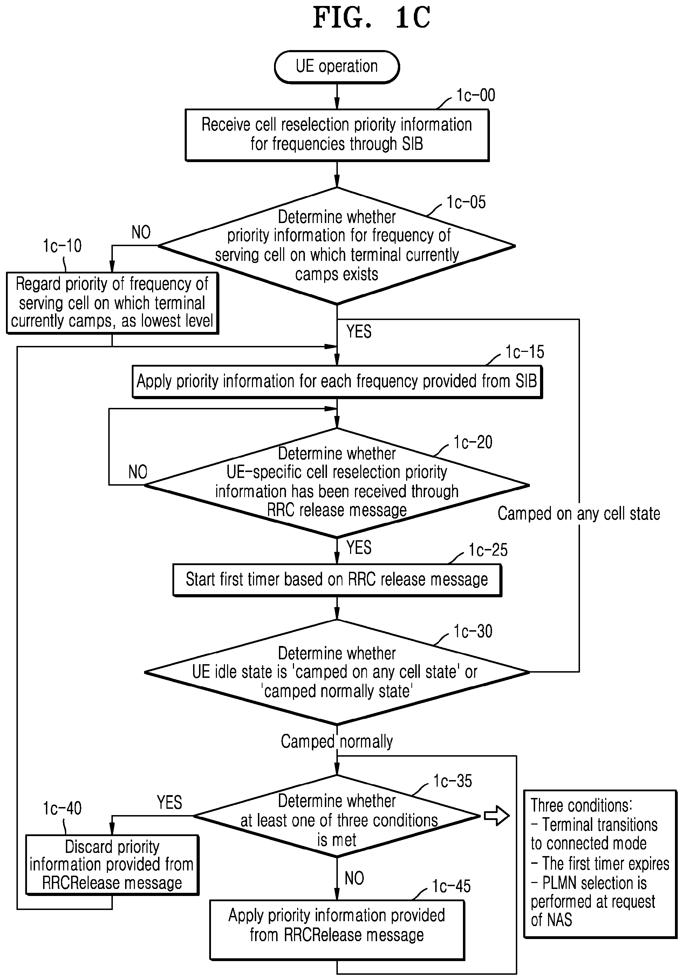

FIG. 1C is a diagram illustrating a process in which per-frequency priority information for cell reselection is broadcast through a system information block (SIB) or applied to a particular terminal through an RRCRelease message, which is dedicated radio resource control (RRC) signaling, in a next-generation mobile communication system, according to an embodiment of the present disclosure.

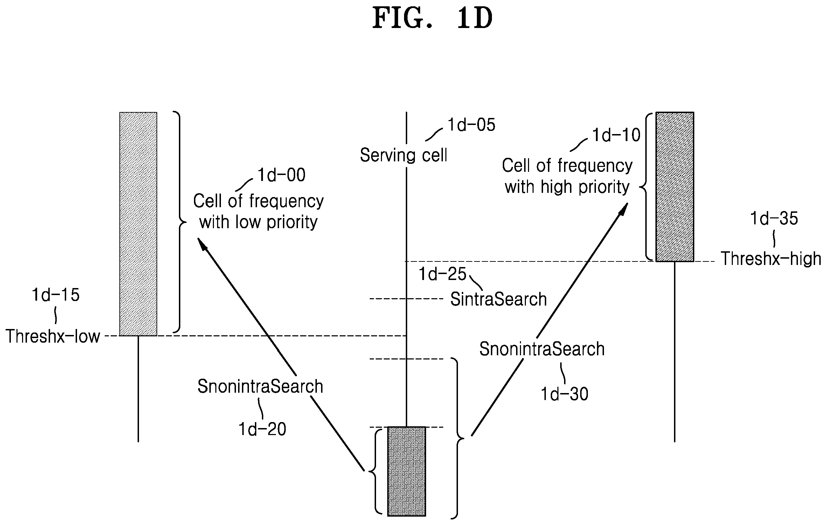

FIG. 1D is a diagram illustrating a method, performed by a terminal, of performing cell reselection in a next-generation mobile communication system, according to an embodiment of the present disclosure.

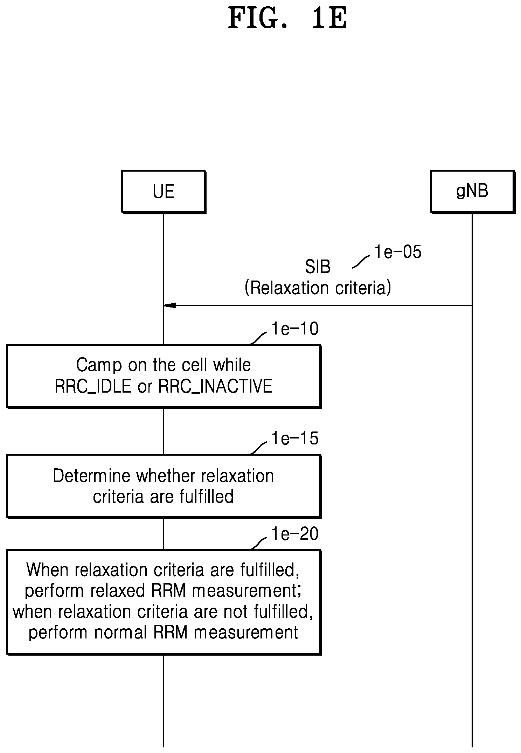

FIG. 1E is a diagram illustrating a method, performed by a terminal and a base station, of performing relaxed radio resource measurement (RRM) measurement, according to an embodiment of the present disclosure.

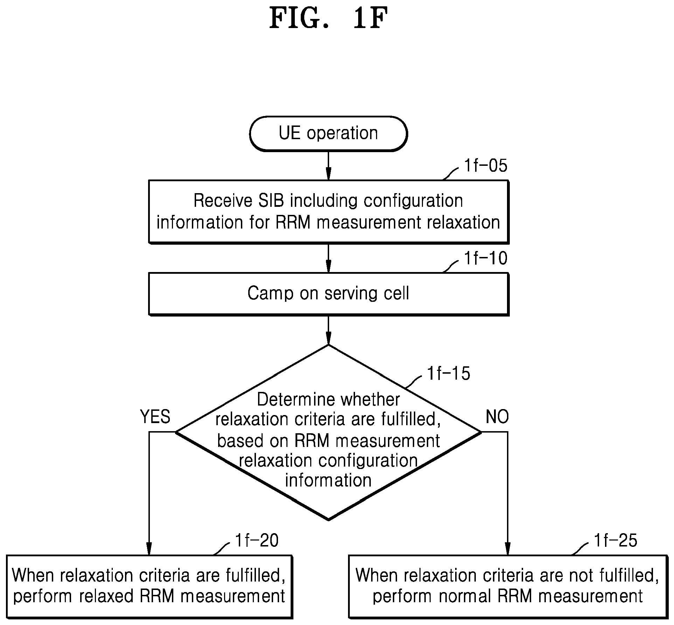

FIG. 1F is a diagram illustrating an example of a process, performed by a terminal, of selecting and performing one of normal RRM measurement or relaxed RRM measurement, according to an embodiment of the present disclosure.

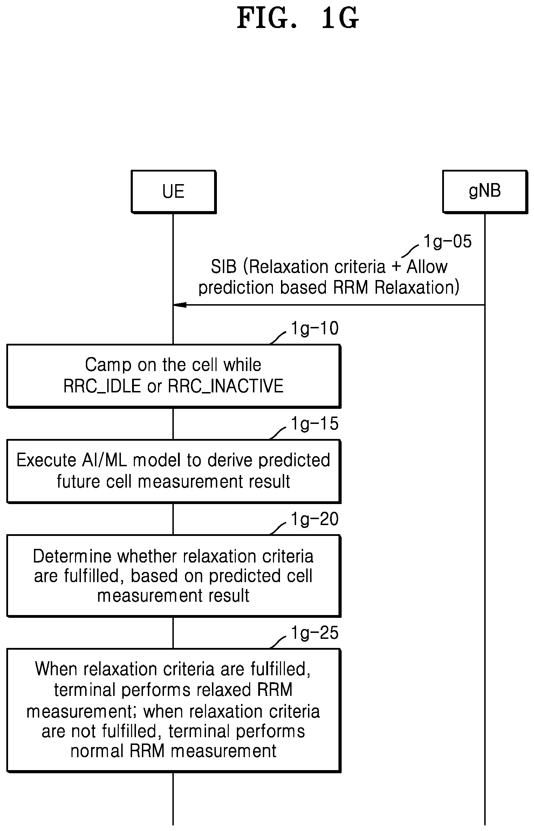

FIG. 1G is a diagram illustrating a process, performed by a terminal in an inactive mode or an idle mode, of performing RRM relaxation through a predicted measurement result based on artificial intelligence/machine learning (AI/ML), according to an embodiment of the present disclosure.

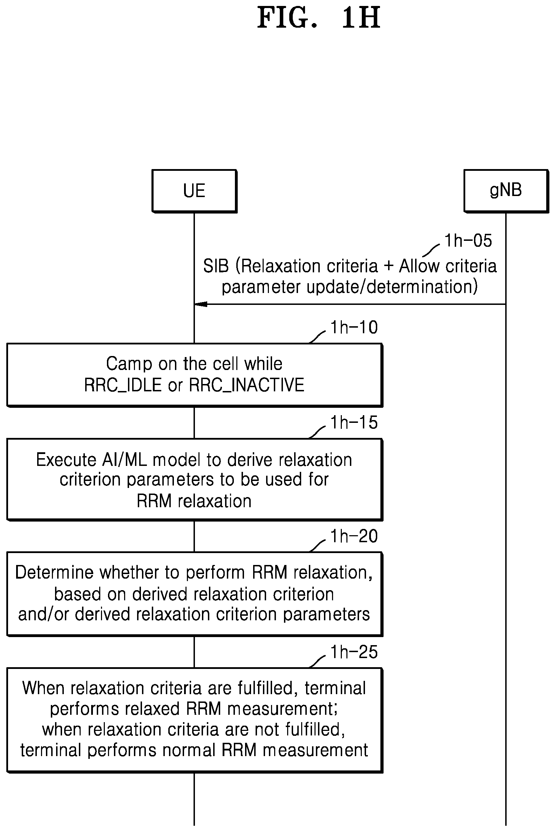

FIG. 1H is a diagram illustrating a process, performed by a terminal in an inactive mode or an idle mode, of performing RRM relaxation through determination/update of relaxation criteria parameters using AI/ML, according to an embodiment of the present disclosure.

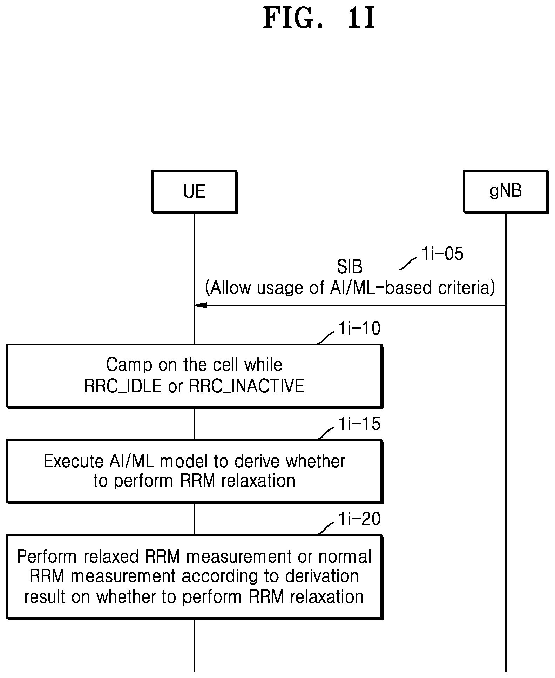

FIG. 1I is a diagram illustrating a process, performed by a terminal in an inactive mode or an idle mode, of deriving, by using AI/ML, whether to perform RRM relaxation and accordingly performing RRM relaxation, according to an embodiment of the present disclosure.

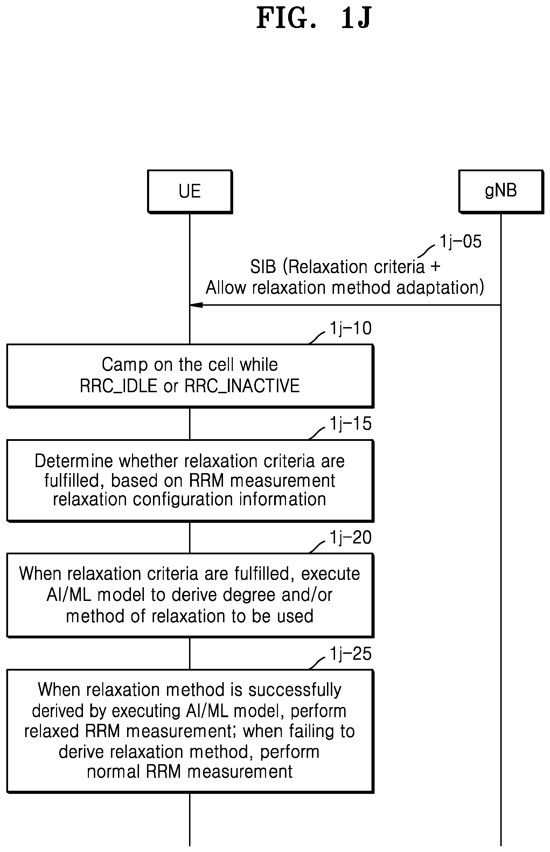

FIG. 1J is a diagram illustrating a process, performed by a terminal in an inactive mode or an idle mode, of performing RRM relaxation through determination/update of a relaxation method using AI/ML, according to an embodiment of the present disclosure.

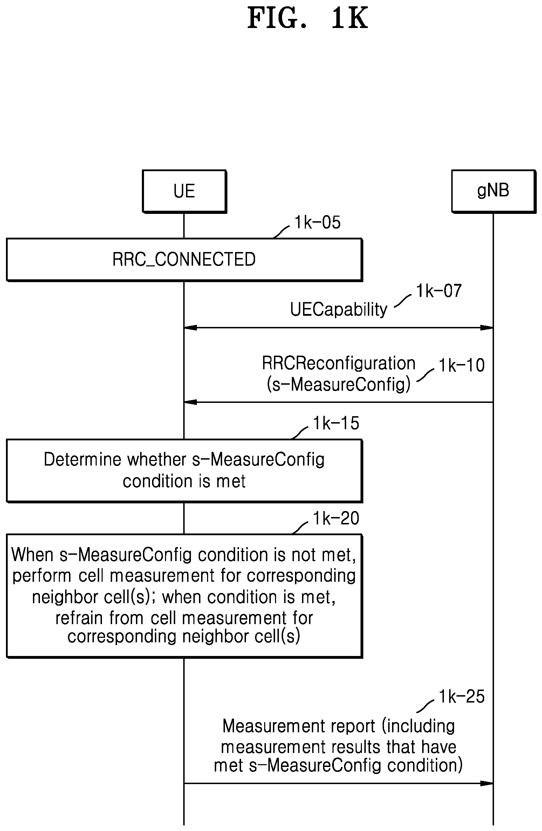

FIG. 1K is a diagram illustrating a process, performed by a terminal in a connected mode, of performing s-MeasureConfig-based RRM relaxation, according to an embodiment of the present disclosure.

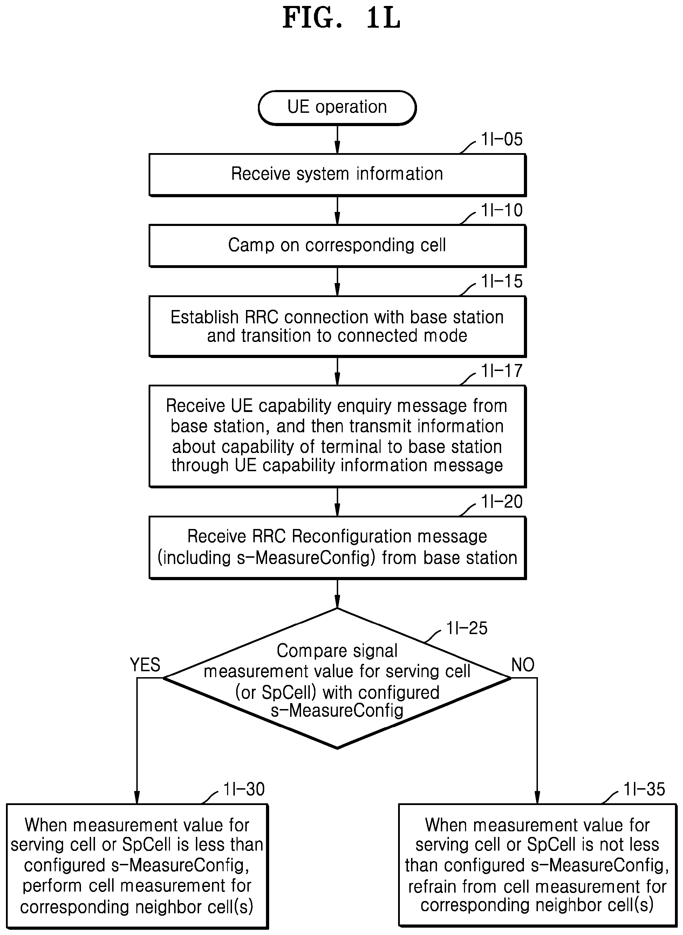

FIG. 1L is a diagram illustrating an operation, performed by a terminal, of determining whether to perform cell measurement based on s-MeasureConfig, according to an embodiment of the present disclosure.

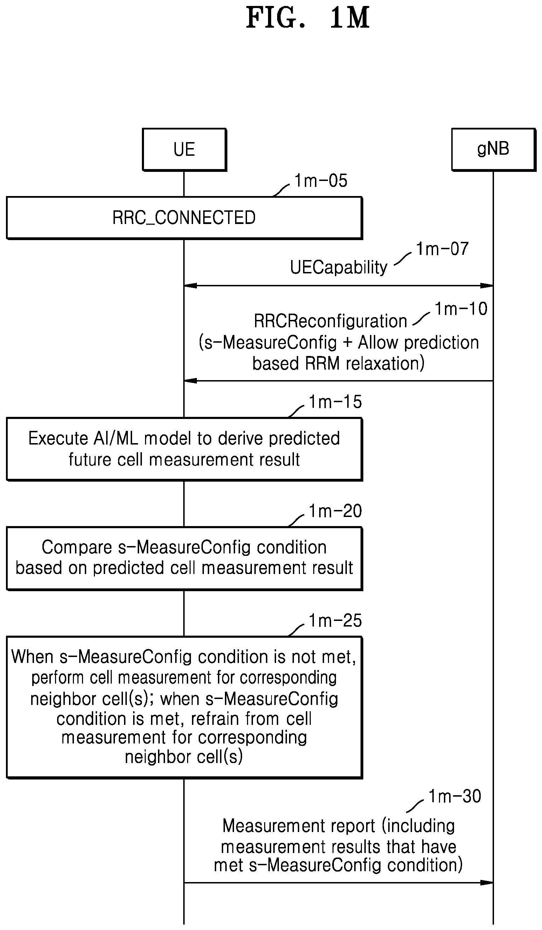

FIG. 1M is a diagram illustrating a process, performed by a terminal in a connected mode, of performing s-MeasureConfig-based RRM relaxation through a predicted measurement result based on AI/ML, according to an embodiment of the present disclosure.

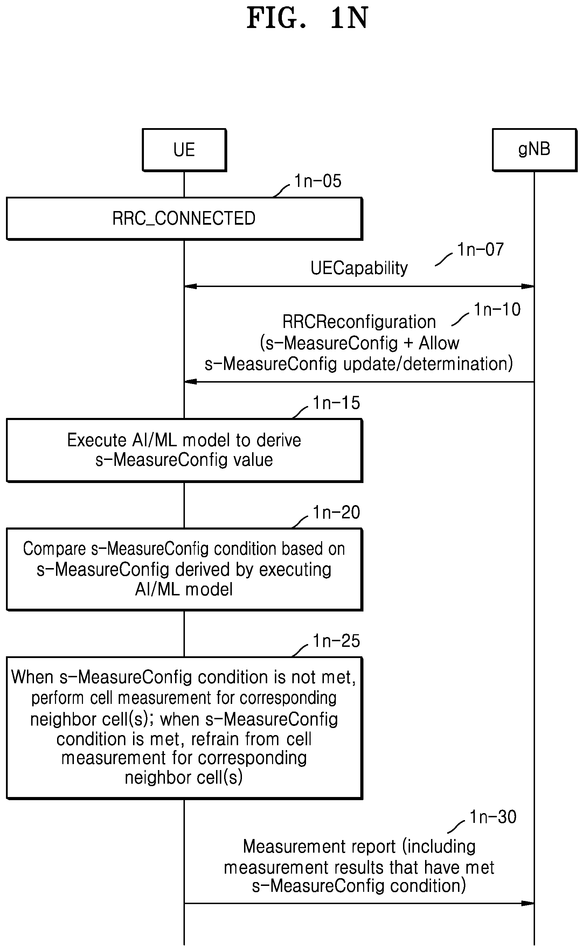

FIG. 1N is a diagram illustrating a process, performed by a terminal in a connected mode, of performing RRM relaxation through determination/update of s-MeasureConfig using AI/ML, according to an embodiment of the present disclosure.

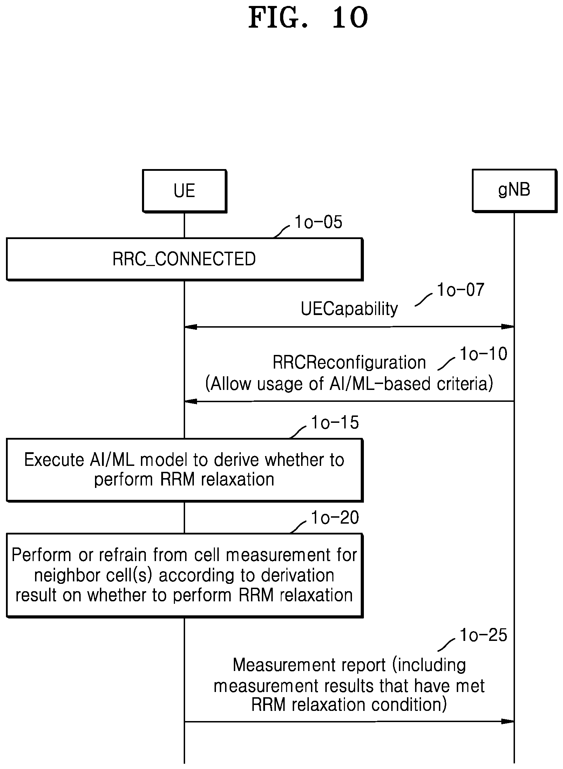

FIG. 1O is a diagram illustrating a process, performed by a terminal in a connected mode, of deriving, by using AI/ML, whether to perform RRM relaxation and accordingly performing RRM relaxation, according to an embodiment of the present disclosure.

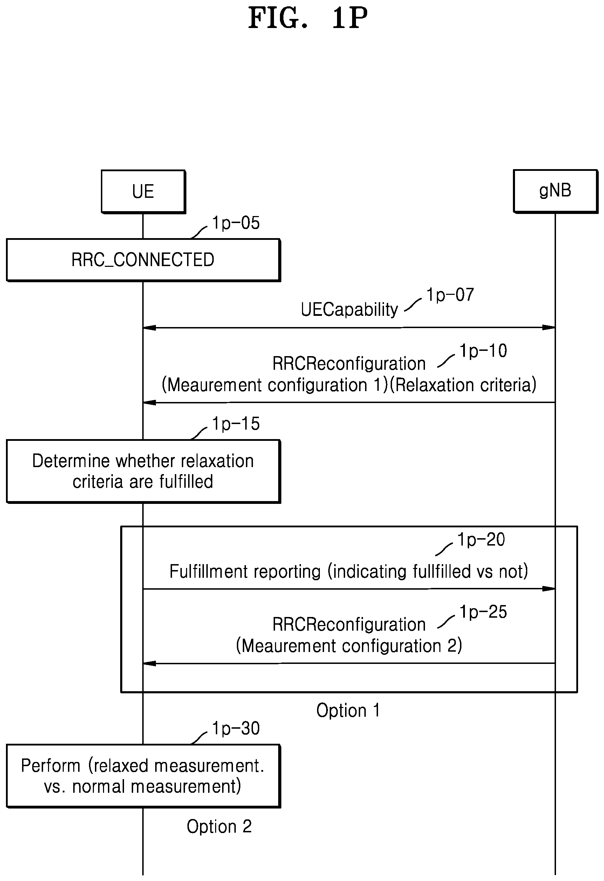

FIG. 1P is a diagram illustrating a process, performed by a terminal in a connected mode, of performing relaxation criterion-based RRM relaxation, according to an embodiment of the present disclosure.

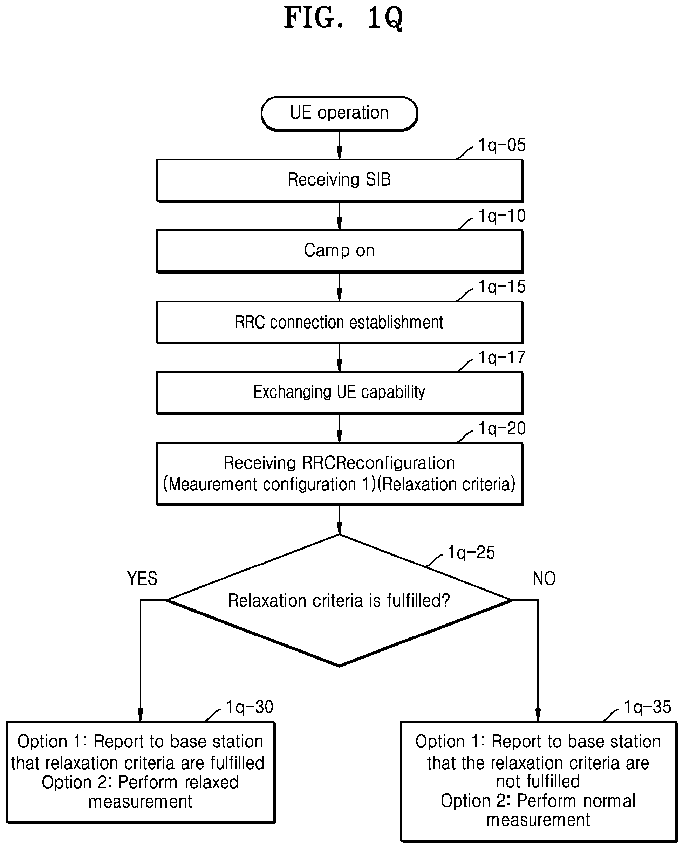

FIG. 1Q is a diagram illustrating an operation, performed by a terminal, of performing relaxed RRM measurement based on relaxation criteria or reporting whether relaxation criteria are fulfilled, according to an embodiment of the present disclosure.

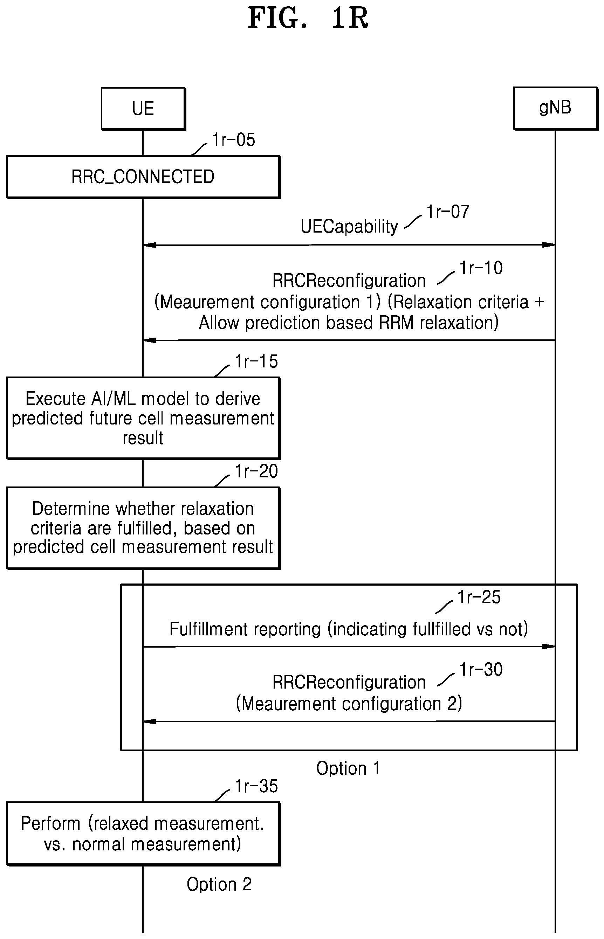

FIG. 1R is a diagram illustrating a process, performed by a terminal in a connected mode, of performing relaxation criterion-based RRM relaxation through a predicted measurement result based on AI/ML, according to an embodiment of the present disclosure.

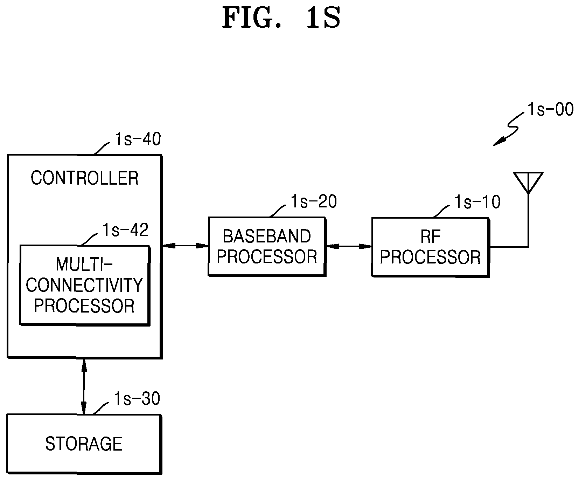

FIG. 1S is a block diagram illustrating a structure of a terminal according to an embodiment of the present disclosure.

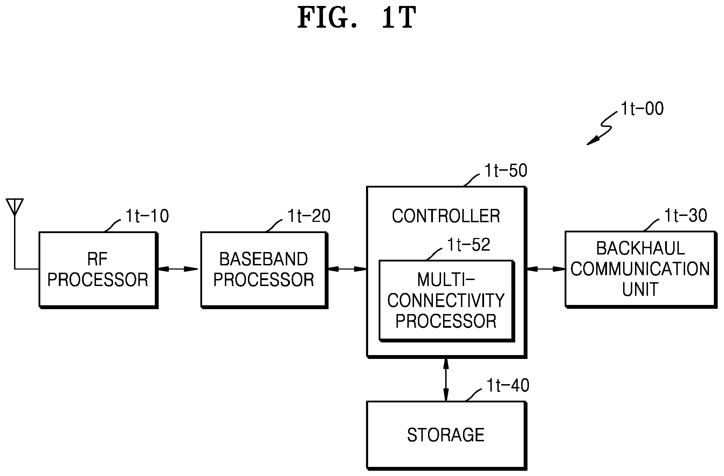

FIG. 1T is a block diagram illustrating a structure of a base station according to an embodiment of the present disclosure.

### Mode for the Invention

The operating principles of the present disclosure will be described in detail below with reference to the accompanying drawings. In describing the present disclosure, when the detailed description of the relevant known functions or configurations is determined to unnecessarily obscure the gist of the present disclosure, the detailed description thereof may be omitted. Furthermore, the terms used herein are defined in consideration of their functions in the present disclosure, and may vary depending on the intent of users or operators, or conventions. Therefore, the definitions thereof should be determined based on the content throughout the present specification.

The terms used in the following description to identify access nodes, to refer to network entities, to refer to messages, to refer to interfaces between network entities, and to refer to various types of identification information are provided for convenience of description. Therefore, the present disclosure is not limited to the terms to be described below, and other terms referring to objects having equivalent technical meanings may be used.

Hereinafter, a base station, as an entity that performs resource allocation for a terminal, may be at least one of a gNode B, an eNode B, a Node B, a base station (BS), a radio access unit, a base station controller, or a node on a network. A terminal may include a user equipment (UE), a mobile station (MS), a cellular phone, a smart phone, a computer, or a multimedia system capable of performing communication functions. In the present disclosure, downlink (DL) refers to the radio transmission path of signals transmitted from a base station to a terminal, and uplink (UL) refers to the radio transmission path of signals transmitted from a terminal to a base station. In addition, while a Long-Term Evolution (LTE) or LTE Advanced (LTE-A) system may be described below as an example, embodiments of the present disclosure may also be applied to other communication systems having similar technical backgrounds or channel configurations. For example, systems to which embodiments of the present disclosure may be applied may include 5th-generation mobile communication technology (5G, New Radio (NR)) or 5G Advanced systems developed after LTE-A, and hereinafter, 5G may be a concept that encompasses existing LTE, LTE-A, and other similar services.

Furthermore, the present disclosure may be applied to other communication systems through partial modifications without departing from the scope of the present disclosure, as judged by those skilled in the art. Here, it may be understood that each block in processing flowchart drawings and combinations of flowchart drawings may be performed by computer program instructions.

These computer program instructions may be loaded in a processor of a general-purpose computer, a particular-purpose computer, or other programmable data processing equipment, and thus, the instructions performed by a processor of a computer or other programmable data processing equipment may generate a means configured to perform functions described in flowchart block(s). These computer program instructions may also be stored in a computer-usable or computer-readable memory capable of orienting a computer or other programmable data processing equipment to implement a function in a particular mode, and thus, the instructions stored in the computer-usable or computer-readable memory may also produce a production item involving an instruction means configured to perform a function described in flowchart block(s). The computer program instructions may also be loaded in a computer or other programmable data processing equipment, and thus, a computer-executable process may also be generated by performing a series of operation steps on the computer or the other programmable data processing equipment so that the instructions executed in the computer or the other programmable data processing equipment provide steps for executing functions described in flowchart block(s).

In addition, each block may indicate a portion of a module, a segment, or code including one or more executable instructions for executing particular logical function(s). Also, in several substitutional embodiments, functions described in blocks may also be out of a sequence. For example, two consecutively illustrated blocks may be substantially performed at the same time in fact, or the blocks may be sometimes performed in a reverse order according to a corresponding function. The term '... unit' used in the embodiments indicates a component including software or hardware, such as a field-programmable gate array (FPGA) or an application-specific integrated circuit (ASIC), and the '... unit' may perform certain roles. However, the term "... unit" is not limited to software or hardware. The "... unit" may be configured either to be stored in an addressable storage medium or to execute one or more processors. Thus, for example, the "... unit" may include elements such as software elements, object-oriented software elements, class elements and task elements, processes, functions, attributes, procedures, subroutines, segments of program code, drivers, firmware, micro-code, circuits, data, a database, data structures, tables, arrays, or variables. Functions provided by the elements and '... units' may be combined into the smaller number of elements and '... units', or may be divided into additional elements and '... units'. In addition, components and '... units' may be implemented to reproduce one or more central processing units (CPUs) inside a device or a security multimedia card. Also, in an embodiment, a '... unit' may include one or more processors.

For convenience of description, the present disclosure utilizes terms and names defined in 5GS and NR standards of the 3rd generation partnership project (3GPP). However, the present disclosure is not limited by these terms and names, and may be equally applied to wireless communication networks complying with other standards. For example, the present disclosure may be applied to 3GPP 5G System (5GS)/NR or 3GPP 5G Advanced standards.

FIG. 1A is a diagram illustrating a structure of a next-generation mobile communication system according to an embodiment of the present disclosure.

Referring to FIG. 1a, a radio access network of the next-generation mobile communication system (New Radio (NR)) may include a next-generation base station (NR Node B, hereinafter referred to as a gNB) 1a-10 and an access and mobility management function (AMF) 1a-05 (NR core network). A user terminal (NR user equipment, hereinafter referred to as an NR UE, a UE, or a terminal) 1a-15 may access an external network via the gNB 1a-10 and the AMF 1a-05.

In FIG. 1A, the gNB corresponds to an evolved Node B (eNB) of a legacy LTE system. The gNB is connected to the NR UE via a radio channel and may provide a superior service compared to a legacy Node B (1a-20). Since all user traffic in the next-generation mobile communication system is served through a shared channel, a device is required to collect status information of UEs, such as buffer status, available transmission power status, or channel status, and perform scheduling, and the gNB 1a-10 handles this function. A single gNB may typically control a plurality of cells. To realize ultra-high-speed data transmission compared to legacy LTE, the bandwidth may exceed the legacy maximum bandwidth, and beamforming technology may additionally be incorporated, by using orthogonal frequency-division multiplexing (hereinafter referred to as "OFDM") as the radio access technology. In addition, an adaptive modulation & coding (hereinafter referred to as "AMC") scheme, which determines a modulation scheme and a channel coding rate in accordance with a channel state of a terminal, may be applied.

The AMF 1a-05 may perform functions such as mobility support, bearer configuration, or quality of service (QoS) configuration. The AMF 1a-05 is a device responsible for various control functions as well as mobility management functions for terminals, and may be connected to a plurality of base stations. The next-generation mobile communication system may also interwork with a legacy LTE system, and the AMF 1a-05 may be connected to a mobility management entity (MME) 1a-25 via a network interface. The MME may be connected to the eNB 1a-30, which is a legacy base station. A terminal supporting LTE-NR dual connectivity may maintain connections to not only the gNB but also the eNB and transmit and receive data (1a-35).

FIG. 1B is a diagram illustrating radio access state transitions of a terminal in a next-generation mobile communication system, according to an embodiment of the present disclosure.

In the next-generation mobile communication system, a terminal may have three radio access states (radio resource control (RRC) states). A connected mode (RRC_CONNECTED) 1b-05 may refer to a radio access state in which a terminal is able to transmit and receive data. An idle mode (RRC_IDLE) 1b-30 may refer to a radio access state in which a

terminal monitors whether paging is transmitted thereto. The connected mode 1b-05 and the idle mode 1b-30 are radio access states that are also applicable to the legacy LTE system, and the detailed description thereof is identical to that of the legacy LTE system. In the next-generation mobile communication system, an inactive radio access state or inactive mode (RRC_INACTIVE) 1b-15 has been newly defined. In the present disclosure, the RRC_INACTIVE state 1b-15 newly defined in the next-generation mobile communication system may correspond to an inactive radio access state, an INACTIVE mode, and the like.

In the inactive mode 1b-15, UE context is maintained in both the base station and the terminal, and radio access network (RAN)-based paging may be supported. The characteristics of the new inactive (RRC_INACTIVE) state 1b-15 are listed as follows.

- Cell re-selection mobility;
- CN - NR RAN connection (both C/U-planes) has been established for UE;
- The UE AS context is stored in at least one gNB and the UE;
- Paging is initiated by NR RAN;
- RAN-based notification area is managed by NR RAN;
- NR RAN knows the RAN-based notification area which the UE belongs to;

According to an embodiment, the INACTIVE state may transition to the connected mode 1b-05 or the idle mode 1b-30 by using a particular procedure. According to a resume procedure, a transition from the INACTIVE mode 1b-15 to the connected mode 1b-05 may be made, and a transition from the connected mode 1b-05 to the INACTIVE mode 1b-15 may be made by using a release procedure including suspend configuration information (1b-10). In the above-described procedure (1b-10), one or more RRC messages may be transmitted and received between the terminal and the base station, and the above-described procedure (1b-10) may include one or more operations. In addition, a transition from the INACTIVE mode 1b-15 to the idle mode 1b-30 may be made through a resume-then-release procedure (1b-20).

A transition between the connected mode 1b-05 and the idle mode 1b-30 may be performed according to the existing LTE technology. That is, a transition between the connected mode 1b-05 and the idle mode 1b-30 may be made through an establishment or release procedure (1b-25).

FIG. 1C is a diagram illustrating a process in which per-frequency priority information for cell reselection is broadcast through a system information block (SIB) or applied to a particular terminal through an RRCRelease message, which is dedicated RRC signaling, in a next-generation mobile communication system, according to an embodiment of the present disclosure.

Cell reselection refers to a process of reselecting a serving cell such that a moving terminal (a terminal in the RRC_INACTIVE or RRC_IDLE state) may be connected to a cell having the best channel condition. The network may control cell reselection of terminals in the idle mode by assigning priorities on a per-frequency basis. For example, when a terminal has received priority information for two frequencies f1 and f2, and the frequency f1 has a higher priority than the frequency f2, the probability of the terminal staying in a cell on the frequency f1 increases. In addition, even when the terminal is in a cell on the frequency f2, but the channel condition of the frequency f2 is poor, the terminal will attempt to switch to a cell on the frequency f1.

Priority information for frequencies may be broadcast through an SIB or provided to a particular terminal through an RRCRelease message, which is dedicated RRC signaling. Even when the terminal already has priority information for frequencies through an SIB, in response to receiving UE-specific priority information through an RRCRelease message via RRC signaling, the priority information of the SIB may be disregarded. As shown in [Table 1] below, priority information for each frequency may be conveyed through a cellReselectionPriority information element (IE), and may currently be assigned one of a total of eight priority levels. A lower value may indicate a lower priority. That is, '0' may indicate the lowest priority.

[Table 1]

| **CellReselectionPriority information element** |
|---|
| -- ASN1START |
| -- TAG-CELLRESELECTIONPRIORITY-START |
| |
| CellReselectionPriority ::= INTEGER (0..7) |
| |
| -- TAG-CELLRESELECTIONPRIORITY-STOP |
| -- ASN1STOP |

Frequencies across different radio access technologies (RATs) cannot be assigned the same priority. When the

IDLE state of the terminal is a 'camped on any cell state,' the terminal may apply frequency priority information received through an SIB, and may store the priority information received through RRC signaling without using it. The cellReselectionPriority IE is an optional IE and may be absent. The absence of the cellReselectionPriority IE indicates that priority information for the corresponding frequency has not been assigned. In this case, the terminal may regard the priority of the corresponding frequency as the lowest level. In operation 1c-00, the terminal may receive, through an SIB, priority information for frequencies used not only in NR but also in other RATs. However, priority information is not necessarily provided for all frequencies. Priority information for the frequency of the serving cell on which the terminal is currently camped may also not be provided. In operation 1c-05, the terminal may check the presence of such priority information. When priority information for the frequency of the current serving cell has not been provided, the priority of the frequency may be regarded as the lowest level, as in operation 1c-10.

In operation 1c-15, the terminal may apply priority information for each frequency. In response to receiving an RRCRelease message from the base station, the terminal may transition from the connected mode to the idle mode or the inactive mode. The RRC message may include frequency priority information. This is UE-specific information and may generally take precedence over frequency priority information received from an SIB. Accordingly, in operation 1c-20, the terminal may determine whether frequency priority information is present in the RRC message. When frequency priority information is present in the RRC message, in operation 1c-25, the terminal may apply a first timer value also included therein to start the first timer. In operation 1c-30, the terminal may determine whether the current idle mode state is a 'camped on any cell state' or a 'camped normally state.' The 'camped normally state' refers to a state in which the terminal is camped on a suitable cell. A suitable cell refers to a cell that may provide a normal service to the terminal and satisfies the following detailed conditions.

- The cell belongs to a selected public land mobile network (PLMN), a registered PLMN, or a PLMN within an equivalent PLMN list;
- The cell is not barred;
- The cell satisfies a cell selection criterion

The 'camped on any cell state' refers to a state in which the terminal has failed to camp on a suitable cell and is camped on an acceptable cell. In an acceptable cell, a normal service is unavailable, and the terminal may only attempt an emergency call. An acceptable cell is a cell that satisfies the following conditions.

- The cell is not barred;
- The cell satisfies a cell selection criterion

When the idle state of the terminal is a 'camped on any cell state', the terminal may not apply the priority information received from the RRCRelease message, and instead may return to operation 1c-15 and apply the frequency priority information received from the SIB. In addition, when the terminal is in a 'camped normally' idle state, in operation 1c-35, the terminal may determine whether at least one of the following three conditions is fulfilled. The three conditions are as follows.

- The terminal has transitioned to the connected mode;
- The first timer has expired;
- A PLMN selection process has been performed in accordance with a non-access stratum (NAS) request

When any one of the above conditions is fulfilled, in operation 1c-40, the priority information received from the RRCRelease message may be discarded, and the terminal may return to operation 1c-15 and apply the frequency priority information received from the SIB. Otherwise, when none of the above conditions is fulfilled, in operation 1c-45, the terminal may apply the priority information received from the RRCRelease message.

Frequency priority information may affect measurement of particular frequencies by the terminal. The terminal may always perform measurement on frequencies having a higher priority than the current serving cell. In contrast, for the same frequency as the serving cell (intra-frequency) or other frequencies having the same or a lower priority, the terminal may not always perform measurement on such frequencies in order to conserve power.

The measurement may be performed when the channel QoS of the serving cell is less than or equal to a particular threshold. Cell reselection is performed to switch to a cell having a good channel condition, and when the channel QoS of the current serving cell is good, there is no reason to switch to a frequency having the same or a lower priority. Accordingly, the terminal may determine whether to perform measurement, based on a particular threshold in order to reduce power consumption due to unnecessary channel measurement. In the case of the same frequency (intra-frequency), when the QoS of the serving cell (i.e., Srxlev or Squal) is lower than or equal to a particular threshold Sintrasearch (s-IntraSearchP and s-IntraSearchQ), channel measurement may be performed on other cells of the same frequency. s-IntraSearchP is a

threshold based on reference signal received power (RSRP), and s-IntraSearchQ is a threshold based on reference signal received quality (RSRQ). When both the measured RSRP and RSRQ of the serving cell are greater than the respective thresholds, intra-frequency measurement is not performed. For other frequencies having the same or a lower priority (inter-frequency), when the QoS of the serving cell (i.e., Srxlev or Squal) is lower than or equal to a particular threshold Snonintrasearch (s-NonIntraSearchP and s-NonIntraSearchQ), channel measurement may be performed on cells on such other frequencies. s-NonIntraSearchP is a threshold based on RSRP, and s-NonIntraSearchQ is a threshold based on RSRQ. When both the measured RSRP and RSRQ of the serving cell are greater than the respective thresholds, inter-frequency measurement is not performed.

In the present disclosure, a state in which intra-frequency or inter-frequency channel measurement is performed through comparison with the thresholds is referred to as a normal measurement state, and a state in which such channel measurement is not performed is referred to as a no measurement state. Regardless of the measurement state, serving cell measurement may always be performed.

While performing measurement in this manner, when the channel QoS of a cell on a frequency having a high priority becomes higher than a particular threshold ThreshX-high, the terminal may reselect the cell on the frequency having a high priority as the serving cell. When the channel QoS of a cell on a frequency having a low priority is higher than a particular threshold ThreshX-low and the QoS of the serving cell becomes lower than ThreshServing-low, the terminal may reselect the cell on the frequency having a low priority as the serving cell.

FIG. 1D is a diagram illustrating a method, performed by a terminal, of performing cell reselection in a next-generation mobile communication system, according to an embodiment of the present disclosure.

The terminal may always perform inter-freq measurement and RAT measurement on frequencies or RATs having a high priority, regardless of the measured signal strength of the serving cell.

When a measured signal strength 1d-05 of the serving cell is lower than SintraSearch 1d-25, the terminal may perform intra-frequency measurement. When the measured signal strength 1d-05 of the serving cell is lower than SnonintraSearch 1d-30, the terminal may perform inter-frequency/RAT measurement on frequencies having the same or a lower priority than the frequency of the current serving cell.

Conversely, when the measured signal strength 1d-05 of the serving cell is higher than SintraSearch 1d-25, the terminal may not perform intra-frequency measurement, and when the measured signal strength 1d-05 of the serving cell is higher than SnonintraSearch 1d-30, the terminal may not perform inter-frequency/RAT measurement on frequencies having the same or a lower priority than the frequency of the current serving cell.

The reason for triggering such an operation of reducing terminal measurement (RRM measurement relaxation or relaxed RRM measurement) may be to reduce power consumption of the terminal due to neighboring cell measurement.

When the channel QoS of a cell 1d-10 on a frequency having a high priority becomes higher than a particular threshold ThreshX-high 1d-35, the terminal may reselect the cell on the frequency having a high priority as the serving cell. When the channel QoS of a cell 1d-00 on a frequency having a low priority is higher than a particular threshold ThreshX-low 1d-15 and the QoS of the serving cell becomes lower than ThreshServing-low 1d-20, the terminal may reselect the cell on the frequency having a low priority as the serving cell.

During cell reselection, received signal strength (RSRP) or received signal quality (RSRQ) may be considered. For each, Srxlev or Squal may be calculated as follows.

$$\mathrm{Srxlev} = Q_{\mathrm{rxlevmeas}} - (Q_{\mathrm{rxlevmin}} + Q_{\mathrm{rxlevminoffset}}) - P_{\mathrm{compensation}} - Q_{\mathrm{offsettemp}}$$

$$\mathrm{Squal} = Q_{\mathrm{qualmeas}} - (Q_{\mathrm{qualmin}} + Q_{\mathrm{qualminoffset}}) - Q_{\mathrm{offsettemp}}$$

Here, the meaning of each variable is as described in [Table 2] below.

[Table 2]

| | |
|---|---|
| Srxlev | Cell selection RX level value (dB) |
| Squal | Cell selection quality value (dB) |
| $\mathrm{Qoffset}_{\mathrm{temp}}$ | Offset temporarily applied to a cell as specified in TS 38.331 [3] (dB) |
| $Q_{\mathrm{rxlevmeas}}$ | Measured cell RX level value (RSRP) |
| $Q_{\mathrm{qualmeas}}$ | Measured cell quality value (RSRQ) |

(continued)

| | |
|---|---|
| $Q_{rxlevmin}$ | Minimum required RX level in the cell (dBm). If the UE supports SUL frequency for this cell, $Q_{rxlevmin}$ is obtained from *q-RxLevMinSUL,* if present, in *SIB1, SIB2* and *SIB4,* additionally, if $Q_{rxlevminoffsetcellSUL}$ is present in *SIB3* and *SIB4* for the concerned cell, this cell specific offset is added to the corresponding $Q_{rxlevmin}$ to achieve the required minimum RX level in the concerned cell;<br>else $Q_{rxlevmin}$ is obtained from *q-RxLevMin* in *SIB1, SIB2* and *SIB4,* additionally, if $Q_{rxlevminoffsetcell}$ is present in *SIB3* and *SIB4* for the concerned cell, this cell specific offset is added to the corresponding Qrxlevmin to achieve the required minimum RX level in the concerned cell. |
| $Q_{qualmin}$ | Minimum required quality level in the cell) (dB). Additionally, if $Q_{qualminoffsetcell}$ is signalled for the concerned cell, this cell specific offset is added to achieve the required minimum quality level in the concerned cell. |
| $Q_{rxlevminoffset}$ | Offset to the signalled $Q_{rxlevmin}$ taken into account in the Srxlev evaluation as a result of a periodic search for a higher priority PLMN while camped normally in a VPLMN, as specified in TS 23.122 [9]. |
| $Q_{qualminoffset}$ | Offset to the signalled $Q_{qualmin}$ taken into account in the Squal evaluation as a result of a periodic search for a higher priority PLMN while camped normally in a VPLMN, as specified in TS 23.122 [9]. |
| $P_{compensation}$ | For FR1, if the UE supports the *additionalPmax* in the *NR-NS-PmaxList,* if present, in *SIB1, SIB2* and *SIB4:*<br>$max(P_{EMAX1} - P_{PowerClass}, 0) - (min(P_{EMAX2}, P_{PowerClass}) - min(P_{EMAX1}, P_{PowerClass}))$ *(dB);*<br>*else:*<br>$max(P_{EMAX1} - P_{PowerClass}, 0)$ *(dB)*<br>For FR2, $P_{compensation}$ is set to 0. |
| $P_{EMAX1}$, $P_{EMAX2}$ | Maximum TX power level of a UE may use when transmitting on the uplink in the cell (dBm) defined as $P_{EMAX}$ in TS 38.101 [15]. If UE supports SUL frequency for this cell, $P_{EMAX1}$ and $P_{EMAX2}$ are obtained from the *p-Max* for SUL in *SIB1* and NR-*NS-PmaxList* for SUL respectively in *SIB1, SIB2* and *SIB4* as specified in TS 38.331 [3], else $P_{EMAX1}$ and $P_{EMAX2}$ are obtained from the *p-Max* and *NR-NS-PmaxList* respectively in *SIB1, SIB2* and *SIB4* for normal UL as specified in TS 38.331 [3]. |
| $P_{PowerClass}$ | Maximum RF output power of the UE (dBm) according to the UE power class as defined in TS 38.101-1 [15]. |

FIG. 1E is a diagram illustrating a method, performed by a terminal and a base station, of performing relaxed RRM measurement in an inactive mode or an idle mode, according to an embodiment of the present disclosure.

In the inactive mode or the idle mode, the terminal may receive system information (1e-05) and then camp on the corresponding cell (1e-10). The terminal in the inactive mode or the idle mode may perform RRM measurement for cell selection or reselection. In FIG. 1E, the terminal performing RRM measurement may determine whether an RRM measurement relaxation parameter or configuration has been set, through information (e.g., relaxedMeasurement) included in system information (e.g., SIB2) 1e-05 received from the base station. For example, relaxedMeasurement may include a plurality of parameters for RRM relaxation, as shown in [Table 3] below.

[Table 3]

```
relaxedMeasurement-r16                 SEQUENCE {
        lowMobilityEvaluation-r16               SEQUENCE {
            s-SearchDeltaP-r16                      ENUMERATED {
                                                        dB3, dB6, dB9, dB12, dB15,
                                                        spare3, spare2, spare1},
            t-SearchDeltaP-r16                      ENUMERATED {
                                                        s5, s10, s20, s30, s60, s120, s180,
                                                        s240, s300, spare7, spare6, spare5,
                                                        spare4, spare3, spare2, spare1}
        }
OPTIONAL,        -- Need R
        cellEdgeEvaluation-r16                  SEQUENCE {
            s-SearchThresholdP-r16                  ReselectionThreshold,
            s-SearchThresholdQ-r16                                              ReselectionThresholdQ
OPTIONAL        -- Need R
        }
OPTIONAL,        -- Need R
        combineRelaxedMeasCondition-r16                                 ENUMERATED      {true}
OPTIONAL,        -- Need R
        highPriorityMeasRelax-r16                                       ENUMERATED      {true}
OPTIONAL        -- Need R
    }
OPTIONAL        -- Need R
    ]],
    [[
    cellEquivalentSize-r17                                                  INTEGER(2..16)
OPTIONAL,        -- Cond HSDN
    relaxedMeasurement-r17                      SEQUENCE {
        stationaryMobilityEvaluation-r17            SEQUENCE {
            s-SearchDeltaP-Stationary-r17               ENUMERATED {dB2, dB3, dB6, dB9, dB12, dB15,
spare2, spare1},
            t-SearchDeltaP-Stationary-r17               ENUMERATED {s5, s10, s20, s30, s60, s120, s180,
s240, s300, spare7, spare6, spare5,
                                                            spare4, spare3, spare2, spare1}
        },
        cellEdgeEvaluationWhileStationary-r17   SEQUENCE {
            s-SearchThresholdP2-r17                     ReselectionThreshold,
            s-SearchThresholdQ2-r17                                             ReselectionThresholdQ
OPTIONAL        -- Need R
        }
OPTIONAL,        -- Need R
        combineRelaxedMeasCondition2-r17                                ENUMERATED      {true}
OPTIONAL        -- Need R
    }
OPTIONAL        -- Need R
    ]]
}
```

When relaxed Measurement is configured in the system information and the terminal supports relaxed measurement, the terminal determines whether RRM (measurement) relaxation may be performed, by using the above parameters (1e-15). When the relaxation criteria (relaxation criteria or relaxation conditions, or relaxed measurement criteria or relaxed measurement conditions) are fulfilled in 1e-15, the terminal may perform relaxed RRM measurement (1e-20). When the relaxation criteria (relaxation criteria or relaxation conditions) are not fulfilled in 1e-15, the terminal cannot perform relaxed RRM measurement and may perform conventional or normal RRM measurement (1e-20).

In process 1e-15, the terminal may be configured with some or all of four relaxed measurement criteria according to the system information configuration of the base station, wherein the four relaxed measurement criteria are 1) low mobility criterion (corresponding to lowMobilityEvaluation in Table 3), 2) not-at-cell-edge criterion (corresponding to cellEdgeEvaluation in Table 3), 3) stationary criterion (corresponding to stationaryMobilityEvaluation in Table 3), and 4) stationary and not-at-cell-edge criterion (corresponding to cellEdgeEvaluationWhileStationary in Table 3). Among these,

3) stationary criterion and 4) stationary and not-at-cell-edge criterion may be used by a Reduced Capability (RedCap) terminal or an enhanced RedCap terminal. The base station may configure only one criterion or may configure a plurality of criteria. Through 1) low mobility criterion and 3) stationary criterion, the terminal may determine that the degree of mobility of the terminal is low, and through 2) not-at-cell-edge criterion, the terminal may determine that the terminal is not located at the edge of the serving cell. That is, because a terminal having low mobility and not located at the cell edge receives stable signal strength from the serving cell, the need for cell reselection to another neighbor cell is low, and thus the terminal may relax RRM measurement for neighbor cells. The relaxed RRM measurement may reduce energy consumption by measuring frequencies at longer intervals (i.e., less frequently) than normal RRM measurement.

The operations related to SintraSearch and SnonintraSearch described above with reference to FIG. 1D may also be applied to FIG. 1E as part of relaxed measurement or RRM relaxation. In detail, in the inactive mode or the idle mode, the terminal may receive system information (1e-05) and then camp on one cell (1e-10). Through the system information (e.g., SIB2), the terminal may receive SintraSearch and/or SnonintraSearch (1e-05). Thereafter, in 1e-15, when the measured signal strength of the serving cell is lower than SintraSearch, the terminal may perform intra-freq measurement (e.g., normal measurement). When the measured signal strength of the serving cell is lower than SnonintraSearch, the terminal may perform inter-freq/RAT measurement on frequencies having the same or a lower priority than the frequency of the current serving cell (e.g., normal measurement). Conversely, when the measured signal strength of the serving cell is higher than SintraSearch, the terminal may not perform intra-freq measurement (e.g., relaxed measurement), and when the measured signal strength of the serving cell is higher than SnonintraSearch, the terminal may not perform inter-freq/RAT measurement on frequencies having the same or a lower priority than the frequency of the current serving cell (e.g., relaxed measurement).

FIG. 1F is a diagram illustrating an example of a process, performed by a terminal, of selecting and performing one of normal RRM measurement or relaxed RRM measurement, according to an embodiment of the present disclosure.

The terminal may receive an SIB and obtain configuration information for RRM measurement relaxation (e.g., SintraSearch, SnonintraSearch, and/or relaxedMeasurement) (1f-05).

The terminal may camp on one serving cell (1f-10).

The terminal may perform RRM measurement for cell reselection on a per-frequency basis (NR intra frequency, NR inter frequency, or inter-RAT frequency) and/or on a per-frequency priority basis, and may determine whether the relaxation criteria are fulfilled according to the RRM measurement relaxation configuration information (1f-15).

When the predetermined relaxation criteria are fulfilled, the terminal may perform relaxed RRM measurement (1f-20). At this time, the terminal may reduce energy consumption by performing measurement at longer intervals than the normal measurement period (i.e., less frequently) or by refraining from measurement. The measurement period for relaxed RRM measurement may be as described in parts of 3GPP TS 38.133 and 3GPP TS 38.304. When the predetermined relaxation criteria are not fulfilled, the terminal may perform normal RRM measurement on the corresponding frequency (1f-25). The measurement period for normal RRM measurement may be as described in 3GPP TS 38.133.

The present disclosure proposes an RRM relaxation method for a terminal using prediction or inference based on artificial intelligence/machine learning (AI/ML).

The terminal according to an embodiment of the present disclosure may use, as input to an AI/ML model, current serving cell and neighbor cell measurement result (RSRP/RSRQ/SINR) information, past serving cell and neighbor cell measurement result (RSRP/RSRQ/SINR) information, location information of the terminal, speed information of the terminal, serving cell history information of the terminal, neighbor cell history information of the terminal, remaining power information of the terminal, configuration information (e.g., RRC configuration information) history of the terminal, capabilities of the terminal, and the like.

The terminal according to an embodiment of the present disclosure may obtain future cell measurement result information (e.g., RSRP/RSRQ/SINR) from the output of the AI/ML model.

Through this, for example, even when a current cell measurement result does not fulfill the relaxation criteria, the terminal may reduce its energy usage by predicting through AI/ML that a future cell measurement result will fulfill the relaxation criteria (e.g., a situation where the terminal is moving toward the center of the serving cell or a situation where the mobility of the terminal is decreasing) and preemptively performing RRM relaxation.

Conversely, for example, even when a current cell measurement result fulfills the relaxation criteria, the terminal may predict through AI/ML that a future cell measurement result (RSRP/RSRQ/SINR) will not fulfill the relaxation criteria (e.g., a situation where the terminal is moving toward the outside of the serving cell or a situation where the mobility of the terminal is increasing) and perform normal measurement instead of RRM relaxation, thereby performing proper cell (re) selection through sufficient cell measurement.

FIG. 1G is a diagram illustrating a process, performed by a terminal in an inactive mode or an idle mode, of performing RRM relaxation through a predicted measurement result based on AI/ML, according to an embodiment of the present disclosure.

In operation 1g-05, the terminal may receive system information in the inactive mode or the idle mode. The

system information may include a configuration related to RRM measurement relaxation (e.g., relaxedMeasurement and/or SintraSearch and SnonintraSearch). In addition, the terminal may receive, from the base station, a configuration related to RRM relaxation using a predicted cell measurement result. In addition, the terminal may receive, from the base station, information regarding whether performing RRM relaxation using a predicted cell measurement result is allowed. Operation 1g-05 may correspond to operation 1f-05 of FIG. 1F.

In operation 1g-10, the terminal may camp on the corresponding cell. Operation 1g-10 may correspond to operation 1f-10 of FIG. 1F.

In operation 1g-15, the terminal may execute the AI/ML model to derive (output) a predicted future cell measurement result (e.g., RSRP/RSRQ/SINR).

In operation 1g-20, the terminal may determine whether to perform RRM relaxation, based on an actual cell measurement result and/or a predicted cell measurement result. Operation 1g-20 may correspond to operation 1f-15 of FIG. 1F. For example, when at least one of the following conditions is met, the terminal may determine that the RRM relaxation criteria are fulfilled.

- Condition 1. The predicted cell measurement result fulfills the not-at-cell-edge criterion. For example, the predicted value is greater than the cell measurement threshold configured by the base station in 1g-05.
- Condition 2. The predicted cell measurement result fulfills the low mobility criterion or stationary criterion. For example, the change in the predicted value is greater than a cell measurement threshold configured by the base station in 1g-05.
- Condition 3. The actual cell measurement result fulfills the not-at-cell-edge criterion. For example, the actual measurement result is greater than the cell measurement threshold configured by the base station in 1g-05.
- Condition 4. The actual cell measurement result fulfills the low mobility criterion or stationary criterion. For example, the change in the actual measurement result is greater than the cell measurement threshold configured by the base station in 1g-05.
- Condition 5. Performing RRM relaxation using a predicted cell measurement result has been allowed by the base station, or a relevant configuration has been received from the base station, for example, in 1g-05.
- Condition 6. Performing RRM relaxation using an actual cell measurement result has been allowed by the base station, or a relevant configuration has been received from the base station, for example, in 1g-05.

In operation 1g-25, in response to determining that the RRM relaxation criteria are fulfilled, the terminal may perform relaxed RRM measurement. This may correspond to operation 1f-20 of FIG. 1F. Conversely, in response to determining that the RRM relaxation criteria are not fulfilled, the terminal may perform normal RRM measurement. This may correspond to operation 1f-25 of FIG. 1F.

In an embodiment of the present disclosure, when RRM relaxation is triggered by the predicted cell measurement result, the terminal may report the predicted cell measurement result to the base station. For example, the terminal may report the predicted cell measurement result to the base station through a UEinformationResponse, MeasurementReport, or UEAssistanceInformation message. This may be useful information when the base station subsequently configures new RRM relaxation parameters for the terminal.

In an embodiment of the present disclosure, the terminal may obtain parameters for the RRM relaxation criteria (e.g., SintraSearch, SnonintraSearch, and/or parameters within relaxedMeasurement) from the output of the AI/ML model.

In a related-art RRM relaxation method, all terminals within one serving cell receive common parameters related to common RRM relaxation criteria in the system information (e.g., SintraSearch, SnonintraSearch, and/or parameters within relaxedMeasurement) and accordingly determine the same RRM relaxation criteria. However, the actual state and situation of each terminal (such as the values used as input to the AI/ML model) may differ, and RRM relaxation criteria configuration tailored to the situation of each terminal may be necessary. For example, when many cells are located around the terminal, enabling the terminal to find the best cell through sufficient RRM measurement by using strict RRM relaxation criteria may help improve throughput when the terminal transitions to the connected mode. Conversely, when there are no other cells around the terminal other than the serving cell, RRM measurement of the terminal may be minimized by using less strict RRM relaxation criteria such that the terminal stays on the serving cell as long as possible and energy consumption due to unnecessary RRM measurement may be reduced.

FIG. 1H is a diagram illustrating a process, performed by a terminal in an inactive mode or an idle mode, of performing RRM relaxation through determination/update of relaxation criteria parameters using AI/ML, according to an embodiment of the present disclosure.

In operation 1h-05, the terminal may receive system information in the inactive mode or the idle mode. The system information may include a configuration related to RRM measurement relaxation (e.g., relaxedMeasurement and/or SintraSearch and SnonintraSearch). In addition, the terminal may receive, from the base station, information regarding whether determination/update of relaxation criteria parameters is allowed. Operation 1h-05 may correspond to

operation 1f-05 of FIG. 1F.

In operation 1h-10, the terminal may camp on the corresponding cell. Operation 1h-10 may correspond to operation 1f-10 of FIG. 1F.

In operation 1h-15, the terminal may execute the AI/ML model to derive (output) relaxation criteria parameters to be used for RRM relaxation. These may be parameters used in the relaxation criteria configured by the base station. Alternatively, not only relaxation criteria parameters to be used but also relaxation criteria to be used may be derived as the output of AI/ML. In this case, when the base station has not configured the relaxation criteria, the terminal may use the derived relaxation criteria, or when the base station has configured the relaxation criteria, the terminal may use the derived relaxation criteria instead of the configured relaxation criteria.

In an embodiment of the present disclosure, the terminal may report the derived relaxation criteria parameters (e.g., thresholds) to the base station upon subsequent transition to the connected mode. For example, the terminal may report the derived relaxation criteria parameters (e.g., thresholds) to the base station upon subsequent transition to the connected mode through a UEinformationResponse, MeasurementReport, or UEAssistanceInformation message. Through this, the base station may obtain information about the RRM relaxation criteria parameters used by the terminal and utilize the obtained information for network configuration.

In operation 1h-20, the terminal may determine whether to perform RRM relaxation, based on the derived relaxation criteria and/or the derived relaxation criteria parameters (e.g., thresholds). Operation 1h-20 may correspond to operation 1f-15 of FIG. 1F. For example, when at least one of the following conditions is met, the terminal may determine that the RRM relaxation criteria are fulfilled.

- Condition 1. The actually measured or predicted cell measurement result fulfills the derived relaxation criteria.
- Condition 2. Determination/update of relaxation criteria has been allowed by the base station, or a relevant configuration has been received from the base station, for example, in 1h-05.

In operation 1h-25, in response to determining that the RRM relaxation criteria are fulfilled, the terminal may perform relaxed RRM measurement. This may correspond to operation 1f-20. Conversely, in response to determining that the RRM relaxation criteria are not fulfilled, the terminal may perform normal RRM measurement. This may correspond to operation 1f-25.

In an embodiment of the present disclosure, the terminal may obtain a result indicating whether to perform RRM relaxation, from the output of the AI/ML model.

In a related-art RRM relaxation method, the terminal may determine whether to perform RRM relaxation, according to relaxation criteria (e.g., low mobility, not-at-cell-edge, and stationary criteria) specified in the standard and configured by the network. However, it may be difficult for the network to configure optimal criteria for each terminal. Furthermore, in addition to the relaxation criteria specified in the standard, there may be important conditions for determining whether the terminal is to perform relaxation. For example, when many cells are located around the terminal, enabling the terminal to find the best cell through sufficient RRM measurement by using strict RRM relaxation criteria may help improve throughput when the terminal transitions to the connected mode. Conversely, when there are no other cells around the terminal other than the serving cell, RRM measurement of the terminal may be minimized by using less strict RRM relaxation criteria such that the terminal stays on the serving cell as long as possible and energy consumption due to unnecessary RRM measurement may be reduced. In such cases, the cell density around the terminal may be an important indicator for determining whether to perform relaxation. As another example, when the remaining power of the terminal is high, enabling the terminal to find the best cell through sufficient RRM measurement may help improve throughput when the terminal transitions to the connected mode. Conversely, when the remaining power of the terminal is low, RRM measurement of the terminal may be minimized such that the terminal stays on the serving cell as long as possible and energy consumption due to unnecessary RRM measurement may be reduced. In such cases, the remaining power of the terminal may also be an important indicator for determining whether to perform relaxation. Accordingly, instead of applying relaxation criteria specified in the standard or configured by the network, the terminal may autonomously and freely (without relying on specification in the standard or configuration by the network) determine whether to perform RRM relaxation, by executing AI/ML in consideration of various pieces of collected information (e.g., cell measurement/prediction results, remaining power, or cell density) (e.g., as input to the model), and perform RRM relaxation.

FIG. 1I is a diagram illustrating a process, performed by a terminal in an inactive mode or an idle mode, of deriving, by using AI/ML, whether to perform RRM relaxation and accordingly performing RRM relaxation, according to an embodiment of the present disclosure.

In operation 1i-05, the terminal may receive system information in the inactive mode or the idle mode. The system information may include a configuration related to RRM measurement relaxation (e.g., relaxedMeasurement and/or SintraSearch and SnonintraSearch). In addition, the terminal may receive, from the base station, information regarding whether the terminal is allowed to derive, by using AI/ML, whether to perform RRM relaxation, and to use the derivation. Operation 1i-05 may correspond to operation 1f-05 of FIG. 1F.

In operation 1i-10, the terminal may camp on the corresponding cell. Operation 1i-10 may correspond to operation 1f-10 of FIG. 1F.

In operation 1i-15, the terminal may execute the AI/ML model to derive (output) whether to perform RRM relaxation. According to an embodiment of the present disclosure, the terminal may use the RRM relaxation configuration criteria and parameters configured by the base station, as one of the input values to the AI/ML model.

In operation 1i-20, the terminal may determine whether to perform RRM relaxation, based on the derived result on whether to perform RRM relaxation. Operation 1i-20 may correspond to operation 1f-15 of FIG. 1F. For example, when at least one of the following conditions is met, the terminal may determine that the RRM relaxation criteria are fulfilled.

- Condition 1. A determination to "perform RRM relaxation" has been derived.
- Condition 2. Deriving whether to perform RRM relaxation and using the derivation has been allowed by the base station, or a relevant configuration has been received from the base station, for example, in 1i-05.

In operation 1i-20, when the RRM relaxation criteria are fulfilled, the terminal may perform relaxed RRM measurement. This may correspond to operation 1f-20. Conversely, when the RRM relaxation criteria are not fulfilled, the terminal may perform normal RRM measurement. This may correspond to operation 1f-25.

In an embodiment of the present disclosure, the terminal may obtain an RRM relaxation method (e.g., a measurement period or whether to perform measurement) from the output of the AI/ML model.

In a related-art RRM relaxation method, the terminal may determine the degree of relaxation according to a relaxation method specified in the standard (e.g., measurement periods described in 3GPP TS 38.331). Accordingly, the network is unable to configure an optimal relaxation method (e.g., a measurement period) for each terminal. Furthermore, a scheme that does not follow a relaxation degree or method specified in the standard may be an optimal relaxation operation for the terminal. For example, when many cells are located around the terminal, enabling the terminal to find the best cell through sufficient RRM measurement by using a relatively short measurement period even when performing relaxation may help improve throughput when the terminal transitions to the connected mode. Conversely, when there are no other cells around the terminal other than the serving cell, RRM measurement of the terminal may be minimized by using a relatively long measurement period when performing relaxation such that the terminal stays on the serving cell as long as possible and energy consumption due to unnecessary RRM measurement may be reduced. In such cases, the cell density around the terminal may be an important indicator for determining the degree and method of relaxation. As another example, when the remaining power of the terminal is high, finding the best cell through sufficient RRM measurement by using a relatively short measurement period even when the terminal performs relaxation may help improve throughput when the terminal transitions to the connected mode. Conversely, when the remaining power of the terminal is low, RRM measurement of the terminal may be minimized by using a relatively long measurement period when performing relaxation such that the terminal stays on the serving cell as long as possible and energy consumption due to unnecessary RRM measurement may be reduced. In such cases, the remaining power of the terminal may be an important indicator for determining the degree and method of relaxation. Accordingly, instead of following a relaxation method (measurement period) specified in the standard, the terminal may autonomously and freely (without relying on specification in the standard) determine the degree and method of RRM relaxation (e.g., a measurement period) by executing AI/ML in consideration of various pieces of collected information (e.g., cell measurement/prediction results, remaining power, or cell density) (e.g., as input to the model).

FIG. 1J is a diagram illustrating a process, performed by a terminal in an inactive mode or an idle mode, of performing RRM relaxation through determination/update of a relaxation method using AI/ML, according to an embodiment of the present disclosure.

In operation 1j-05, the terminal may receive system information in the inactive mode or the idle mode. The system information may include a configuration related to RRM measurement relaxation (e.g., relaxedMeasurement and/or SintraSearch and SnonintraSearch). In addition, the terminal may receive, from the base station, information regarding whether determination/update of a relaxation method is allowed. Operation 1j-05 may correspond to operation 1f-05 of FIG. 1F.

In operation 1j-10, the terminal may camp on the corresponding cell. Operation 1j-10 may correspond to operation 1f-10 of FIG. 1F.

In operation 1j-15, when at least one of the following conditions is met, the terminal may determine that the RRM relaxation criteria are fulfilled.

- Condition 1. The relaxation criteria according to a configuration related to RRM measurement relaxation provided by the base station (e.g., a not-at-cell-edge, low mobility, or stationary criterion) are fulfilled.
- Condition 2. Determination/update of a relaxation method has been allowed by the base station, or a relevant configuration has been received from the base station.

In operation 1j-20, in response to determining that the relaxation criteria are fulfilled, the terminal may execute the AI/ML model to derive (output) the degree and/or method of relaxation to be used (e.g., a measurement period, a measurement frequency, a measurement frequency type, a time interval for performing a relaxation operation).

In operation 1j-25, when the terminal determines that the RRM relaxation criteria are fulfilled and has successfully derived a relaxation method by executing the AI/ML model, the terminal may perform relaxed RRM measurement according to the derivation. This may correspond to operation 1f-20.

When the terminal determines that the RRM relaxation criteria are fulfilled but fails to derive a relaxation method, the terminal may perform relaxed RRM measurement according to a fixed relaxation method defined in the standard (e.g., a measurement period described in 3GPP TS 38.133). Here, the fixed relaxation method defined in the standard may be a method that does not use an AI/ML model. This may correspond to operation 1f-20. For example, when the terminal determines that the RRM relaxation criteria are fulfilled but fails to derive a relaxation method by executing the AI/ML model within a time limit configured by the network or defined in the standard, the terminal may perform relaxed RRM measurement according to a fixed relaxation method defined in the standard (e.g., a measurement period described in 3GPP TS 38.133).

In response to determining that the RRM relaxation criteria are not fulfilled, the terminal may perform normal RRM measurement, which may correspond to operation 1f-25.

FIG. 1K is a diagram illustrating a process, performed by a terminal in a connected mode, of performing s-MeasureConfig-based RRM relaxation, according to an embodiment of the present disclosure.

In operation 1k-05, the terminal may be in a connected mode with the base station.

In operation 1k-07, after receiving a UE capability enquiry message from the base station, the terminal may transmit information about the capability of the terminal to the base station through a UE capability information message. Here, the terminal may transmit information regarding whether RRM relaxation is supported in the connected mode, by including the information in, or along with, the UE capability information message. Here, the terminal may transmit information regarding whether s-MeasureConfig-based RRM relaxation or determination of whether to perform cell measurement is supported, by including the information in, or along with, the UE capability information message.

In operation 1k-10, the terminal receives an RRC Reconfiguration message from the base station. The message may include a configuration for cell measurement (e.g., MeasConfig), and the terminal may be configured with s-MeasureConfig as one of the parameters of the configuration. The s-MeasureConfig may indicate an RSRP (or RSRQ or SINR) threshold used by the terminal in 1k-15 to determine whether to perform measurement on non-serving cells or neighbor cells.

In operation 1k-15, the terminal may perform signal (e.g., CSI-RS, SSB) measurement on the serving cell (or SpCell) and compare a signal measurement result (e.g., RSRP) for the serving cell (or SpCell) with the configured s-MeasureConfig.

In operation 1k-20, in response to determining that the s-MeasureConfig condition is not satisfied (i.e., when the signal measurement result for the serving cell or SpCell is less than the configured s-MeasureConfig), the terminal may perform cell measurement on the corresponding neighbor cell(s) and derive cell measurement results. Conversely, in response to determining that the s-MeasureConfig condition is satisfied (i.e., when the signal measurement result for the serving cell or SpCell is not less than the configured s-MeasureConfig), the terminal may not perform cell measurement on the corresponding neighbor cell(s) and may not derive cell measurement results.

In operation 1k-25, the terminal may transmit a measurement report to the base station, including only the measurement results that satisfy the s-MeasureConfig condition.

FIG. 1L is a diagram illustrating an operation, performed by a terminal, of determining whether to perform cell measurement based on s-MeasureConfig, according to an embodiment of the present disclosure.

In operation 1l-05, the terminal may receive system information.

In operation 1l-10, the terminal may camp on a cell.

In operation 1l-15, the terminal may establish an RRC connection with the base station and transition to the connected mode.

In operation 1l-17, after receiving a UE capability enquiry message from the base station, the terminal may transmit information about the capability of the terminal to the base station through a UE capability information message.

In operation 1l-20, the terminal receives an RRC Reconfiguration message from the base station. The message may include a configuration for cell measurement (e.g., MeasConfig), and the terminal may be configured with s-MeasureConfig as one of the parameters of the configuration. The s-MeasureConfig may indicate an RSRP (or RSRQ or SINR) threshold used by the terminal in 1l-25 to determine whether to perform measurement on non-serving cells or neighbor cells.

In operation 1l-25, the terminal may perform signal (e.g., CSI-RS, SSB) measurement on the serving cell (or SpCell) and compare a signal measurement result (e.g., RSRP) for the serving cell (or SpCell) with the configured s-MeasureConfig.

In operation 1l-30, in response to determining that the s-MeasureConfig condition is not satisfied (i.e., when the

measurement result for the serving cell or SpCell is less than the configured s-MeasureConfig), the terminal may perform cell measurement on the corresponding neighbor cell(s) and derive cell measurement results.

In operation 1l-35, in response to determining that the s-MeasureConfig condition is satisfied (i.e., when the measurement result for the serving cell or SpCell is not less than the configured s-MeasureConfig), the terminal may not perform cell measurement on the corresponding neighbor cell(s) and may not derive cell measurement results.

Through this, when the measurement result for the serving cell or SpCell is favorable, the terminal may achieve energy saving by reducing unnecessary measurement on neighbor cells and simplifying measurement reporting.

FIG. 1M is a diagram illustrating a process, performed by a terminal in a connected mode, of performing s-MeasureConfig-based RRM relaxation through a predicted measurement result based on AI/ML, according to an embodiment of the present disclosure.

In operation 1m-05, the terminal may be in a connected mode with the base station.

In operation 1m-07, after receiving a UE capability enquiry message from the base station, the terminal may transmit information about the capability of the terminal to the base station through a UE capability information message. Here, the terminal may report, to the base station, information about the capability of performing RRM relaxation through comparison between a predicted cell measurement result and s-MeasureConfig, by including the information in, or along with, the UE capability information message.

In operation 1m-10, the terminal receives an RRC Reconfiguration message from the base station. The message may include a configuration for cell measurement (e.g., MeasConfig), and the terminal may be configured with s-MeasureConfig as one of the parameters of the configuration. In addition, the terminal may receive, from the base station, a configuration related to performing RRM relaxation through comparison between a predicted cell measurement result and s-MeasureConfig. In addition, the terminal may receive, from the base station, information regarding whether performing RRM relaxation through comparison between a predicted cell measurement result and s-MeasureConfig is allowed.

In operation 1m-15, the terminal may execute the AI/ML model to derive (output) a predicted future measurement result for the serving cell (or SpCell) (e.g., RSRP/RSRQ/SINR).

In operation 1m-20, the terminal may compare, with the s-MeasureConfig configured by the base station, a measurement result for the serving cell (or SpCell) obtained by performing signal (e.g., CSI-RS, SSB) measurement on the serving cell (or SpCell), and/or a predicted value (e.g., RSRP) for the serving cell (or SpCell) obtained by executing the AI/ML model to perform prediction. For example, when at least one of the following conditions is met, the terminal may determine that the s-MeasureConfig condition is satisfied.

- Condition 1. The predicted cell measurement result satisfies the s-MeasureConfig condition. That is, for example, the predicted value for the serving cell or SpCell is not less than the configured s-MeasureConfig.
- Condition 2. The actual cell measurement result satisfies the s-MeasureConfig condition. That is, for example, the measurement result for the serving cell or SpCell is not less than the configured s-MeasureConfig.
- Condition 3. Performing RRM relaxation through comparison between a predicted cell measurement result and s-MeasureConfig has been allowed by the base station, for example, in 1m-10.
- Condition 4. Performing RRM relaxation through comparison between an actual cell measurement result and s-MeasureConfig has been allowed by the base station, or a relevant configuration has been received from the base station, for example, in 1m-10.

In operation 1m-25, in response to determining that the s-MeasureConfig condition is not satisfied, the terminal may perform cell measurement on the corresponding neighbor cell(s) and derive cell measurement results. Conversely, in response to determining that the s-MeasureConfig condition is satisfied, the terminal may not perform cell measurement on the corresponding neighbor cell(s) and may not derive cell measurement results.

In operation 1m-30, the terminal may transmit a measurement report to the base station, including only the measurement results that satisfy the s-MeasureConfig condition.

In an embodiment of the present disclosure, when RRM relaxation is triggered by a predicted cell measurement result (i.e., when the s-MeasureConfig condition is satisfied), the terminal may report the predicted cell measurement result to the base station. For example, the terminal may report the predicted cell measurement result to the base station through a UEinformationResponse, MeasurementReport, or UEAssistanceInformation message. This may be useful information when the base station subsequently configures a new s-MeasureConfig for the terminal.

FIG. 1N is a diagram illustrating a process, performed by a terminal in a connected mode, of performing RRM relaxation through determination/update of s-MeasureConfig using AI/ML, according to an embodiment of the present disclosure.

In operation 1n-05, the terminal may be in a connected mode with the base station.

In operation 1n-07, after receiving a UE capability enquiry message from the base station, the terminal may transmit information about the capability of the terminal to the base station through a UE capability information message.

Here, the terminal may report, to the base station, information about the capability of determining/updating an s-MeasureConfig value, by including the information in, or along with, the UE capability information message.

In operation 1n-10, the terminal receives an RRC Reconfiguration message from the base station. The message may include a configuration for cell measurement (e.g., MeasConfig), and the terminal may be configured with s-MeasureConfig as one of the parameters of the configuration. The s-MeasureConfig may indicate an RSRP (or RSRQ or SINR) threshold used by the terminal in 1n-20 to determine whether to perform measurement on non-serving cells or neighbor cells. In addition, the terminal may receive, from the base station, information regarding whether determination/update of an s-MeasureConfig value is allowed.

In operation 1n-15, the terminal may execute the AI/ML model to derive (output) an s-MeasureConfig value. Here, the s-MeasureConfig value configured by the base station may be used as one of input values to the AI/ML model. In an embodiment of the present disclosure, the terminal may report the derived s-MeasureConfig value to the base station. For example, the terminal may report the derived s-MeasureConfig value to the base station through a UEinformationResponse, MeasurementReport, or UEAssistanceInformation message. Through this, the base station may obtain information about the s-MeasureConfig value used by the terminal and utilize the obtained information for network configuration.

In operation 1n-20, the terminal may compare a measurement result (e.g., RSRP) for the serving cell (or SpCell) obtained by performing signal (e.g., CSI-RS, SSB) measurement on the serving cell (or SpCell), with the s-MeasureConfig newly derived by executing the AI/ML model. For example, when at least one of the following conditions is met, the terminal may determine that the s-MeasureConfig condition is satisfied.

- Condition 1. The actually measured or predicted cell measurement result satisfies the derived s-MeasureConfig condition. That is, for example, the measurement result for the serving cell or SpCell is not less than the derived s-MeasureConfig.
- Condition 2. Determination/update of an s-MeasureConfig value has been allowed by the base station, or a relevant configuration has been received from the base station, for example, in 1n-10.

In operation 1n-25, in response to determining that the s-MeasureConfig condition is not satisfied, the terminal may perform cell measurement on the corresponding neighbor cell(s) and derive cell measurement results. Conversely, in response to determining that the s-MeasureConfig condition is satisfied, the terminal may not perform cell measurement on the corresponding neighbor cell(s) and may not derive cell measurement results.

In operation 1n-30, the terminal may transmit a measurement report to the base station, including only the measurement results that satisfy the s-MeasureConfig condition.

FIG. 1O is a diagram illustrating a process, performed by a terminal in a connected mode, of deriving, by using AI/ML, whether to perform RRM relaxation and accordingly performing RRM relaxation, according to an embodiment of the present disclosure.

In operation 1o-05, the terminal may be in a connected mode with the base station.

In operation 1o-07, after receiving a UE capability enquiry message from the base station, the terminal may transmit information about the capability of the terminal to the base station through a UE capability information message. Here, the terminal may report, to the base station, information about the capability of deriving, by using AI/ML, whether to perform RRM relaxation and using the derivation, by including the information in, or along with, the UE capability information message.

In operation 1o-10, the terminal receives an RRC Reconfiguration message from the base station. The message may include a configuration for cell measurement (e.g., MeasConfig), and the terminal may be configured with s-MeasureConfig as one of the parameters of the configuration. The s-MeasureConfig may indicate an RSRP (or RSRQ or SINR) threshold used by the terminal in 1o-20 to determine whether to perform measurement on the serving cell. In addition, the terminal may receive, from the base station, information regarding whether the terminal is allowed to derive, by using AI/ML, whether to perform RRM relaxation, and to use the derivation.

In operation 1o-15, the terminal may execute the AI/ML model to derive (output) whether to perform RRM relaxation. In an embodiment of the present disclosure, the terminal may use the s-MeasureConfig value configured by the base station, as one of the input values to the AI/ML model.

In operation 1o-20, the terminal may determine whether to perform RRM relaxation, based on the derived result on whether to perform RRM relaxation. For example, when at least one of the following conditions is met, the terminal may determine that the RRM relaxation criteria are fulfilled.

- Condition 1. A determination to "perform RRM relaxation" has been derived.
- Condition 2. Deriving whether to perform RRM relaxation and using the derivation has been allowed by the base station, or a relevant configuration has been received from the base station, for example, in 1o-10.

In response to determining that the RRM relaxation criteria are not fulfilled, the terminal may perform cell measurement on the corresponding neighbor cell(s) and derive cell measurement results. Conversely, in response to determining that the RRM relaxation criteria are fulfilled, the terminal may not perform cell measurement on the corresponding neighbor cell(s) and may not derive cell measurement results.

In operation 1o-25, the terminal may transmit a measurement report to the base station, including only the measurement results that fulfill the RRM relaxation criteria.

FIG. 1P is a diagram illustrating a process, performed by a terminal in a connected mode, of performing relaxation criterion-based RRM relaxation, according to an embodiment of the present disclosure.

In operation 1p-05, the terminal may be in a connected mode with the base station.

In operation 1p-07, after receiving a UE capability enquiry message from the base station, the terminal may transmit information about the capability of the terminal to the base station through a UE capability information message. Here, the terminal (e.g., a RedCap terminal) may transmit information regarding whether RRM relaxation is supported in the connected mode, by including the information in, or along with, the UE capability information message. Here, the terminal (e.g., a RedCap terminal) may transmit information regarding whether relaxation criteria fulfillment reporting (e.g., for a stationary criterion) in the connected mode is supported, by including the information in, or along with, the UE capability information message.

In operation 1p-10, the terminal may receive relaxation criteria and related parameters (e.g., a threshold for evaluating a stationary criterion) from the base station through an RRC Reconfiguration message. In addition, the terminal may receive a cell measurement configuration (e.g., cell measurement configuration 1) (e.g., MeasConfig) from the base station through an RRC Reconfiguration message.

In operation 1p-15, the terminal may perform signal (e.g., CSI-RS, SSB) measurement on the serving cell (or SpCell) and determine, based on a measurement result (e.g., RSRP, RSRQ, SINR) for the serving cell (or SpCell), whether the configured relaxation criteria (e.g., a stationary criterion) are fulfilled.

In an embodiment of the present disclosure, after operation 1p-15, the terminal/base station may perform Option 1 (1p-20 and 1p-25) and may not perform Option 2 (1p-30).

In an embodiment of the present disclosure, after operation 1p-15, the terminal/base station may perform Option 2 (1p-30) and may not perform Option 1 (1p-20 and 1p-25).

In operation 1p-20, in response to determining that the relaxation criteria are not fulfilled (e.g., when the variation in the measurement result for the serving cell or SpCell is large), the terminal may report to the base station that the relaxation criteria are not fulfilled. For example, the terminal may report to the base station by omitting a relaxation criteria fulfillment indicator or by setting it to false.

Conversely, in response to determining that the relaxation criteria are fulfilled (e.g., when the variation in the measurement result for the serving cell or SpCell is small), the terminal may report to the base station that the relaxation criteria are fulfilled. For example, the terminal may report to the base station by including a relaxation criteria fulfillment indicator or by setting it to true.

In operation 1p-25, in response to receiving a report from the terminal indicating that the relaxation criteria are fulfilled, the base station may configure the terminal with a cell measurement configuration (e.g., cell measurement configuration 2) that is more relaxed than cell measurement configuration 1 configured in 1p-10 (e.g., through an RRC Reconfiguration message). Conversely, in response to receiving a report from the terminal indicating that the relaxation criteria are not fulfilled, the base station may not configure the terminal with a relaxed cell measurement configuration (e.g., cell measurement configuration 2) (e.g., through an RRC Reconfiguration message).

In operation 1p-30, in response to determining that the relaxation criteria are not fulfilled (e.g., when the variation in the measurement result for the serving cell or SpCell is large), the terminal may perform normal measurement according to cell measurement configuration 1. Conversely, in response to determining that the relaxation criteria are fulfilled (e.g., when the variation in the measurement result for the serving cell or SpCell is small), the terminal may perform measurement under a relaxed version of cell measurement configuration 1 (e.g., performing measurement on only some of the measurement objects or measurement identities configured in cell measurement configuration 1, or performing measurement and reporting at a longer period than the reporting configuration period configured in cell measurement configuration 1).

FIG. 1Q is a diagram illustrating an operation, performed by a terminal, of performing relaxed measurement based on relaxation criteria or reporting whether relaxation criteria are fulfilled, according to an embodiment of the present disclosure.

In operation 1q-05, the terminal may receive system information.

In operation 1q-10, the terminal may camp on a cell.

In operation 1q-15, the terminal may establish an RRC connection with the base station and transition to the connected mode.

In operation 1q-17, after receiving a UE capability enquiry message from the base station, the terminal may transmit information about the capability of the terminal to the base station through a UE capability information message.

Here, the terminal (e.g., a RedCap terminal) may transmit information regarding whether RRM relaxation is supported in the connected mode, by including the information in, or along with, the UE capability information message. Here, the terminal (e.g., a RedCap terminal) may transmit information regarding whether relaxation criteria fulfillment reporting (e.g., for a stationary criterion) in the connected mode is supported, by including the information in, or along with, the UE capability information message.

In operation 1q-20, the terminal may receive relaxation criteria and related parameters (e.g., a threshold for evaluating a stationary criterion) from the base station through an RRC Reconfiguration message. In addition, the terminal may receive a cell measurement configuration (e.g., cell measurement configuration 1) (e.g., MeasConfig) from the base station through an RRC Reconfiguration message.

In operation 1q-25, the terminal may perform signal (e.g., CSI-RS, SSB) measurement on the serving cell (or SpCell) and determine, based on a measurement result (e.g., RSRP, RSRQ, SINR) for the serving cell (or SpCell), whether the configured relaxation criteria (e.g., a stationary criterion) are fulfilled.

In an embodiment of the present disclosure, after operation 1q-25, the terminal/base station may perform Option 1 in 1q-30 and 1q-35 and may not perform Option 2 in 1q-30 and 1q-35.

In an embodiment of the present disclosure, after operation 1p-15, the terminal/base station may perform Option 2 in 1q-30 and 1q-35 and may not perform Option 1 in 1q-30 and 1q-35.

In operation 1q-30, in response to determining that the relaxation criteria are fulfilled, under Option 1, the terminal may report to the base station that the relaxation criteria are fulfilled. For example, the terminal may report to the base station by including a relaxation criteria fulfillment indicator or by setting it to true. In response to determining that the relaxation criteria are fulfilled, under Option 2, the terminal may perform measurement under a relaxed version of cell measurement configuration 1 (e.g., performing measurement on only some of the measurement objects or measurement identities configured in cell measurement configuration 1, or performing measurement and reporting at a longer period than the reporting configuration period configured in cell measurement configuration 1).

In operation 1q-35, in response to determining that the relaxation criteria are not fulfilled, under Option 1, the terminal may report to the base station that the relaxation criteria are not fulfilled. For example, the terminal may report to the base station by omitting a relaxation criteria fulfillment indicator or by setting it to false. In response to determining that the relaxation criteria are not fulfilled, under Option 2, the terminal may perform normal measurement according to cell measurement configuration 1.

FIG. 1R is a diagram illustrating a process, performed by a terminal in a connected mode, of performing relaxation criterion-based RRM relaxation through a predicted measurement result based on AI/ML, according to an embodiment of the present disclosure.

In operation 1r-05, the terminal may be in a connected mode with the base station.

In operation 1r-07, after receiving a UE capability enquiry message from the base station, the terminal may transmit information about the capability of the terminal to the base station through a UE capability information message. Here, the terminal (e.g., a RedCap terminal) may transmit information regarding whether RRM relaxation is supported in the connected mode, by including the information in, or along with, the UE capability information message. Here, the terminal (e.g., a RedCap terminal) may transmit information regarding whether relaxation criteria fulfillment reporting (e.g., for a stationary criterion) in the connected mode is supported, by including the information in, or along with, the UE capability information message. Here, the terminal may report, to the base station, information about the capability of performing RRM relaxation using a predicted cell measurement result, by including the information in, or along with, the UE capability information message.

In operation 1r-10, the terminal may receive relaxation criteria and related parameters (e.g., a threshold for evaluating a stationary criterion) from the base station through an RRC Reconfiguration message. In addition, the terminal may receive a cell measurement configuration (e.g., cell measurement configuration 1) (e.g., MeasConfig) from the base station through an RRC Reconfiguration message. In addition, the terminal may receive, from the base station, a configuration related to performing RRM relaxation using a predicted cell measurement result (e.g., RRM relaxation criteria). In addition, the terminal may receive, from the base station, information regarding whether performing RRM relaxation using a predicted cell measurement result is allowed.

In operation 1r-15, the terminal may execute the AI/ML model to derive (output) a predicted future measurement result for the serving cell (or SpCell) (e.g., RSRP/RSRQ/SINR).

In operation 1r-20, the terminal may determine whether the relaxation criteria configured by the base station are fulfilled, based on a measurement result for the serving cell (or SpCell) obtained by performing signal (e.g., CSI-RS, SSB) measurement on the serving cell (or SpCell), and/or a predicted value (e.g., RSRP, RSRQ, SINR) for the serving cell (or SpCell) obtained by executing the AI/ML model to perform prediction. For example, when at least one of the following conditions is met, the terminal may determine that the relaxation criteria are fulfilled.

- Condition 1. The predicted cell measurement result fulfills the relaxation criteria.
- Condition 2. The actual cell measurement result fulfills the relaxation criteria.

- Condition 3. Performing RRM relaxation using a predicted cell measurement result has been allowed by the base station, or a relevant configuration has been received from the base station, for example, in 1r-10.
- Condition 4. Performing RRM relaxation using an actual cell measurement result has been allowed by the base station, or a relevant configuration has been received from the base station, for example, in 1r-10.

In an embodiment of the present disclosure, after operation 1r-20, the terminal/base station may perform Option 1 (1r-25 and 1r-30) and may not perform Option 2 (1r-35).

In an embodiment of the present disclosure, after operation 1r-20, the terminal/base station may perform Option 2 (1r-35) and may not perform Option 1 (1r-25 and 1r-30).

In operation 1r-25, in response to determining that the relaxation criteria are not fulfilled (e.g., when the variation in the measurement result for the serving cell or SpCell is large), the terminal may report to the base station that the relaxation criteria are not fulfilled. For example, the terminal may report to the base station by omitting a relaxation criteria fulfillment indicator or by setting it to false.

Conversely, in response to determining that the relaxation criteria are fulfilled (e.g., when the variation in the measurement result for the serving cell or SpCell is small), the terminal may report to the base station that the relaxation criteria are fulfilled. For example, the terminal may report to the base station by including a relaxation criteria fulfillment indicator or by setting it to true.

In operation 1r-30, in response to receiving a report from the terminal indicating that the relaxation criteria are fulfilled, the base station may configure the terminal with a cell measurement configuration (e.g., cell measurement configuration 2) that is more relaxed than cell measurement configuration 1 configured in 1r-10 (e.g., through an RRC Reconfiguration message). Conversely, in response to receiving a report from the terminal indicating that the relaxation criteria are not fulfilled, the base station may not configure the terminal with a relaxed cell measurement configuration (e.g., cell measurement configuration 2) (e.g., through an RRC Reconfiguration message).

In operation 1r-35, in response to determining that the relaxation criteria are not fulfilled (e.g., when the variation in the measurement result for the serving cell or SpCell is large), the terminal may perform normal measurement according to cell measurement configuration 1. Conversely, in response to determining that the relaxation criteria are fulfilled (e.g., when the variation in the measurement result for the serving cell or SpCell is small), the terminal may perform measurement under a relaxed version of cell measurement configuration 1 (e.g., performing measurement on only some of the measurement objects or measurement identities configured in cell measurement configuration 1, or performing measurement and reporting at a longer period than the reporting configuration period configured in cell measurement configuration 1).

In an embodiment of the present disclosure, when transmitting a measurement report (e.g., in 1k-25), the terminal may indicate whether the terminal has performed AI/ML-based RRM relaxation or relaxed measurement. In response to receiving the measurement report, the base station may become aware that the terminal has performed RRM relaxation or relaxed measurement, calculate the impact thereof on the network and the terminal, and utilize the result for network optimization and resource management.

In an embodiment of the present disclosure, upon a radio link failure (RLF) or a handover failure (HOF), the terminal may store, as RLF report information, information regarding whether AI/ML-based RRM relaxation or relaxed measurement has been performed, and report the information to the base station. This may be useful information for the base station to determine whether the cause of an RLF or HOF has originated from the RRM relaxation of the terminal.

In an embodiment of the present disclosure, the RRM relaxation method performed by the terminal may differ depending on which RRM relaxation criterion the terminal has fulfilled.

For example, a relaxed measurement period used in operation 1g-25 of FIG. 1G when the terminal has met one condition (e.g., Condition 1) in operation 1g-20 of FIG. 1G may differ from a relaxed measurement period used in operation 1g-25 of FIG. 1G when the terminal has met another condition (e.g., Condition 3) in operation 1g-20 of FIG. 1G.

For example, a relaxed measurement period used in operation 1g-25 of FIG. 1G when the terminal has met a plurality of conditions (e.g., Condition 1 and Condition 3) in operation 1g-20 of FIG. 1G may be longer than a relaxed measurement period used in operation 1g-25 of FIG. 1G when the terminal has met one condition (e.g., Condition 3) in operation 1g-20 of FIG. 1G.

In an embodiment of the present disclosure, along with information derived as output of the AI/ML model (e.g., a predicted cell measurement result, RRM relaxation criteria, a parameter related to the RRM relaxation criteria, whether to perform RRM relaxation, or an RRM relaxation method), accuracy and/or occurrence probability of the corresponding information may also be derived as output of the AI/ML model.

The terminal according to an embodiment of the present disclosure may perform RRM relaxation by using the corresponding information derived as output only when the accuracy and/or occurrence probability of the corresponding information derived as output is greater than a particular threshold (e.g., a variable value configured by the network, or a fixed value defined in the standard). Otherwise, the terminal may not perform RRM relaxation by using the corresponding information derived as output.

In an embodiment of the present disclosure, the terminal may perform an RRM relaxation-related operation for neighbor cells based on a measurement result (e.g., RSRP, RSRQ, and/or SINR) for the serving cell.

In an embodiment of the present disclosure, the terminal may perform an RRM relaxation-related operation for the same cell (e.g., cell 1) based on a measurement result (e.g., RSRP, RSRQ, and/or SINR) for a particular cell (e.g., cell 1). Determining whether to perform RRM relaxation for a particular cell based on a measurement result for the particular cell may be the most accurate approach.

For example, performing RRM relaxation for neighbor cells (e.g., by extending the measurement period) because the variation in the measurement result for the serving cell is small (e.g., because the low-mobility criterion is fulfilled) may include an assumption that the neighbor cells will also have no significant variation compared to the currently measured value. However, even when the variation in the measurement result for the serving cell is small, the variation in the actual measurement result for neighbor cells may be large. In this case, when RRM relaxation is performed for neighbor cells, the terminal may make an incorrect decision regarding neighbor cells (e.g., in a situation where the RSRP value for a neighbor cell is rapidly decreasing, a terminal in the inactive mode or idle mode may perform RRM relaxation and thereby fail to obtain the latest RSRP value for the corresponding cell, and subsequently reselect and camp on the corresponding cell). Accordingly, to determine whether to perform RRM relaxation on neighbor cells, it may be desirable to base the determination on measurement values for the corresponding cells. Similarly, the terminal may determine whether to perform RRM relaxation on the serving cell based on a measurement result for the corresponding serving cell. Through this, the terminal may determine and perform different RRM relaxation methods (e.g., different measurement periods) on a per-cell basis.

FIG. 1S is a block diagram illustrating an internal structure of a terminal 1s-00 according to an embodiment of the present disclosure.

Referring to FIG. 1S, the terminal 1s-00 according to an embodiment of the present disclosure may include a radio-frequency (RF) processor 1s-10, a baseband processor 1s-20, a storage 1s-30, and a controller 1s-40.

The RF processor 1s-10 performs functions for transmitting and receiving signals through a radio channel, such as band conversion and amplification of signals. That is, the RF processor 1s-10 up-converts a baseband signal provided from the baseband processor 1s-20 to an RF band signal and transmits the RF band signal through an antenna, and down-converts an RF band signal received through the antenna to a baseband signal. For example, the RF processor 1s-10 may include a transmission filter, a reception filter, an amplifier, a mixer, an oscillator, a digital-to-analog converter (DAC), an analog-to-digital converter (ADC), and the like. Although FIG. 1S illustrates only one antenna, the terminal may include a plurality of antennas. In addition, the RF processor 1s-10 may include a plurality of RF chains. Furthermore, the RF processor 1s-10 may perform beamforming. For the beamforming, the RF processor 1s-10 may adjust the phase and magnitude of signals transmitted and received through a plurality of antennas or antenna elements. In addition, the RF processor may perform a multiple-input and multiple-output (MIMO) operation, and may receive a plurality of layers when performing a MIMO operation.

The baseband processor 1s-20 performs a function of conversion between a baseband signal and a bit string according to a physical layer specification of the system. For example, upon transmitting data, the baseband processor 1s-20 generates complex symbols by encoding and modulating a transmission bit string. In addition, upon receiving data, the baseband processor 1s-20 restores a reception bit string by demodulating and decoding a baseband signal provided from the RF processor 1s-10. For example, in a case of conforming to an OFDM scheme, upon transmitting data, the baseband processor 1s-20 generates complex symbols by encoding and modulating a transmission bit string, maps the complex symbols to subcarriers, and constructs OFDM symbols through an inverse fast Fourier transform (IFFT) operation and cyclic prefix (CP) insertion. Furthermore, upon receiving data, the baseband processor 1s-20 divides the baseband signal provided from the RF processor 1s-10 into OFDM symbols, recovers signals mapped to subcarriers through a fast Fourier transform (FFT) operation, and reconstructs a reception bit string by demodulating and decoding the signals.

The baseband processor 1s-20 and the RF processor 1s-10 transmit and receive signals as described above. Accordingly, the baseband processor 1s-20 and the RF processor 1s-10 may be referred to as a transmitter, a receiver, a transceiver, or a communication unit. Furthermore, at least one of the baseband processor 1s-20 and the RF processor 1s-10 may include a plurality of communication modules to support a plurality of different radio access technologies. In addition, at least one of the baseband processor 1s-20 and the RF processor 1s-10 may include different communication modules to process signals of different frequency bands. For example, the different radio access technologies may include a wireless LAN (e.g., IEEE 802.11), a cellular network (e.g., LTE), and the like. In addition, the different frequency bands may include a super high frequency (SHF) (e.g., 2.NRHz, NRhz) band and a millimeter-wave (e.g., 60GHz) band.

The storage 1s-30 stores data such as a basic program, an application program, and configuration information for operations of the terminal 1s-00 according to an embodiment of the present disclosure. In particular, the storage 1s-30 may store information related to a second access node that performs wireless communication by using a second radio access technology. In addition, the storage 1s-30 provides the stored data at a request of the controller 1s-40. The storage 1s-30 may also be referred to as a memory.

The controller 1s-40 controls overall operations of the terminal 1s-00. For example, the controller 1s-40 transmits and receives signals through the baseband processor 1s-20 and the RF processor 1s-10. In addition, the controller 1s-40 writes data to and reads data from the storage 1s-30. To this end, the controller 1s-40 may include at least one processor. For example, the controller 1s-40 may include a communication processor (CP) that performs control for communication, and an application processor (AP) that controls a higher layer such as an application program. The controller 1s-40 may control overall operations of the terminal 1s-00 according to the embodiments proposed in the present disclosure by executing one or more instructions stored in the memory 1s-30.

The processor 1s-40 may include various pieces of processing circuitry and/or a plurality of processors. For example, the term "processor" used herein, including in the claims, may include various pieces of processing circuitry including at least one processor. One or more processors in the at least one processor may be configured to perform various functions described herein individually and/or collectively in a distributed manner. As used herein, "processor," "at least one processor," and "one or more processors" may be configured to perform various functions. However, these terms cover, but is not limited to, situations where one processor performs some of the functions and other processor(s) perform the other functions, and situations where a single processor may perform all of the functions. In addition, the at least one processor may include a combination of processors configured to perform various functions disclosed herein in a distributed manner. The at least one processor may execute program instructions to achieve or perform various functions.

In an embodiment, the at least one processor 1s-40 may be a general-purpose processor, such as a central processing unit (CPU), an AP, or a digital signal processor (DSP), a dedicated graphics processor, such as a graphics processing unit (GPU) or a vision processing unit (VPU), or a dedicated artificial intelligence processor, such as a neural processing unit (NPU). For example, in a case in which the one or more processors are dedicated artificial intelligence processors, the dedicated artificial intelligence processor may be designed with a hardware structure specialized for processing a particular artificial intelligence model.

The predefined operation rules or artificial intelligence model is generated via a training process. Here, being generated via a training process may mean that predefined operation rules or artificial intelligence model set to perform desired characteristics (or purposes), is generated by training a basic artificial intelligence model (or deep learning model) by using a learning algorithm that utilizes a large amount of training data. The training process may be performed by a device itself on which artificial intelligence according to the disclosure is performed, or by a separate server and/or system. Examples of learning algorithms may include supervised learning, unsupervised learning, semi-supervised learning, and reinforcement learning, but are not limited thereto.

The artificial intelligence model (or deep learning model) may include a plurality of neural network layers. Each of the plurality of neural network layers has a plurality of weight values, and performs a neural network operation through a calculation between a calculation result of a previous layer and the plurality of weight values. The plurality of weight values in each of the plurality of neural network layers may be optimized as a result of training the artificial intelligence model. For example, the plurality of weight values may be updated to reduce or minimize a loss or cost value obtained by the artificial intelligence model during a training process. The artificial neural network may include a deep neural network (DNN), for example, a convolutional neural network (CNN), a recurrent neural network (RNN), a restricted Boltzmann machine (RBM), a deep belief network (DBN), a bidirectional recurrent deep neural network (BRDNN), or a deep Q-network, but is not limited thereto.

FIG. 1T is a block diagram illustrating a configuration of a base station 1t-00 according to an embodiment of the present disclosure.

Referring to FIG. 1T, the base station 1t-00 according to an embodiment of the present disclosure may include an RF processor 1t-10, a baseband processor 1t-20, a backhaul communication unit 1t-30, a storage 1t-40, and a controller 1t-50.

The RF processor 1t-10 performs functions for transmitting and receiving signals through a radio channel, such as band conversion and amplification of signals. That is, the RF processor 1t-10 up-converts a baseband signal provided from the baseband processor 1t-20 to an RF band signal and transmits the RF band signal through an antenna, and down-converts an RF band signal received through the antenna to a baseband signal. For example, the RF processor 1t-10 may include a transmission filter, a reception filter, an amplifier, a mixer, an oscillator, a DAC, an ADC, and the like. Although FIG. 1T illustrates only one antenna, the first access node may include a plurality of antennas. In addition, the RF processor 1t-10 may include a plurality of RF chains. Furthermore, the RF processor 1t-10 may perform beamforming. For the beamforming, the RF processor 1t-10 may adjust the phase and magnitude of signals transmitted and received through a plurality of antennas or antenna elements. The RF processor may perform a DL MIMO operation by transmitting one or more layers.

The baseband processor 1t-20 performs a function of conversion between a baseband signal and a bit string according to a physical layer specification of a first radio access technology. For example, upon transmitting data, the baseband processor 1t-20 generates complex symbols by encoding and modulating a transmission bit string. In addition, upon receiving data, the baseband processor 1t-20 restores a reception bit string by demodulating and decoding a baseband signal provided from the RF processor 1t-10. For example, in the case of conforming to an OFDM scheme, upon

transmitting data, the baseband processor 1t-20 generates complex symbols by encoding and modulating a transmission bit string, maps the complex symbols to subcarriers, and constructs OFDM symbols through an IFFT operation and CP insertion. Furthermore, upon receiving data, the baseband processor 1t-20 divides the baseband signal provided from the RF processor 1t-10 into OFDM symbols, recovers signals mapped to subcarriers through an FFT operation, and reconstructs a reception bit string by demodulating and decoding the signals. The baseband processor 1t-20 and the RF processor 1t-10 transmit and receive signals as described above. Accordingly, the baseband processor 1t-20 and the RF processor 1t-10 may be referred to as a transmitter, a receiver, a transceiver, a communication unit, or a wireless communication unit.

The backhaul communication unit 1t-30 provides an interface for performing communication with other nodes in a network. That is, the backhaul communication unit 1t-30 converts a bit string to be transmitted from the master base station to another node, for example, a secondary base station, a core network, or the like, into a physical signal, and converts a physical signal received from the other node into a bit string.

The storage 1t-40 stores data such as a basic program, an application program, and configuration information for operations of the base station 1t-00. In particular, the storage 1t-40 may store information about a bearer allocated to a connected terminal, a measurement result reported from the connected terminal, and the like. In addition, the storage 1t-40 may store information serving as a criterion for determining whether to provide or suspend multiple connections to the terminal. In addition, the storage 1t-40 provides the stored data at a request of the controller 1t-50. The storage 1t-40 may also be referred to as a memory.

The controller 1t-50 controls overall operations of the master base station 1t-00. For example, the controller 1t-50 transmits and receives signals through the baseband processor 1t-20 and the RF processor 1t-10, or through the backhaul communication unit 1t-30. In addition, the controller 1t-50 writes data to and reads data from the storage 1t-40. To this end, the controller 1t-50 may include at least one processor. The controller 1t-50 may control overall operations of the base station 1t-00 according to the embodiments proposed in the present disclosure by executing one or more instructions stored in the memory 1t-40.

The processor 1t-50 may include various pieces of processing circuitry and/or a plurality of processors. For example, the term "processor" used herein, including in the claims, may include various pieces of processing circuitry including at least one processor. One or more processors in the at least one processor may be configured to perform various functions described herein individually and/or collectively in a distributed manner. As used herein, "processor," "at least one processor," and "one or more processors" may be configured to perform various functions. However, these terms cover, but is not limited to, situations where one processor performs some of the functions and other processor(s) perform the other functions, and situations where a single processor may perform all of the functions. In addition, the at least one processor may include a combination of processors configured to perform various functions disclosed herein in a distributed manner. The at least one processor may execute program instructions to achieve or perform various functions.

In an embodiment, the at least one processor 1t-50 may be a general-purpose processor, such as a CPU, an AP, or a DSP, a dedicated graphics processor, such as a GPU or a VPU, or a dedicated artificial intelligence processor, such as an NPU. For example, in a case in which the one or more processors are dedicated artificial intelligence processors, the dedicated artificial intelligence processor may be designed with a hardware structure specialized for processing a particular artificial intelligence model.

The predefined operation rules or artificial intelligence model is generated via a training process. Here, being generated via a training process may mean that predefined operation rules or artificial intelligence model set to perform desired characteristics (or purposes), is generated by training a basic artificial intelligence model (or deep learning model) by using a learning algorithm that utilizes a large amount of training data. The training process may be performed by a device itself on which artificial intelligence according to the disclosure is performed, or by a separate server and/or system. Examples of learning algorithms may include supervised learning, unsupervised learning, semi-supervised learning, and reinforcement learning, but are not limited thereto.

The artificial intelligence model (or deep learning model) may include a plurality of neural network layers. Each of the plurality of neural network layers has a plurality of weight values, and performs a neural network operation through a calculation between a calculation result of a previous layer and the plurality of weight values. The plurality of weight values in each of the plurality of neural network layers may be optimized as a result of training the artificial intelligence model. For example, the plurality of weight values may be updated to reduce or minimize a loss or cost value obtained by the artificial intelligence model during a training process. The artificial neural network may include a DNN, for example, a CNN, an RNN, an RBM, a DBN, a BRDNN, or a deep Q-network, but is not limited thereto.

In the embodiments of the present disclosure described above, the elements included in the present disclosure have been expressed in the singular or plural form according to the suggested embodiments of the present disclosure. However, the expression in the singular or plural form is appropriately selected according to the suggested situations for convenience of explanation and is not intended to limit the present disclosure to the single or plural elements, and even when a certain element is expressed in the plural form, it may be provided with a single element, and even when a certain element is expressed in the singular form, it may be provided with a plurality of elements.

Although certain embodiments have been described in the detailed description of the present disclosure, various modifications may be made without departing from the scope of the present disclosure. Therefore, the scope of the present disclosure should not be limited to the above-described embodiments of the present disclosure and should be determined by the appended claims and the equivalents thereof.

A detailed example for describing an embodiment according to the present disclosure is merely a combination of each standard, method, detailed method, and operation, and through a combination of two or more techniques among various techniques described above, a terminal or a base station may perform an AI/ML-based relaxed RRM operation in a next-generation mobile communication system. Here, the operation may be performed according to a method determined through one of the above-described techniques or a combination of two or more thereof. For example, it may be possible to perform some of operations of an embodiment in combination with some of operations of another embodiment.

A machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the 'non-transitory storage medium' may include a buffer in which data is temporarily stored. According to an embodiment, methods according to various embodiments disclosed herein may be included in a computer program product and then provided. The computer program product may be traded as a commodity between sellers and buyers. The computer program product may be distributed in the form of a machine-readable storage medium (e.g., a compact disc read-only memory (CD-ROM)), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

## Claims

**1.** A method performed by a user equipment (UE) in a wireless communication system, the method comprising:

obtaining, from a base station, configuration information related to artificial intelligence/machine learning (AI/ML)-based radio resource measurement (RRM) relaxation;
obtaining, by using AI/ML, information including a predicted cell measurement result;
determining, based on the information including the predicted cell measurement result, whether at least one RRM relaxation criterion is fulfilled; and
performing, based on the determining, relaxed RRM measurement or normal RRM measurement.

**2.** The method of claim 1, further comprising receiving, from the base station, information indicating whether performing the AI/ML-based RRM relaxation is allowed.

**3.** The method of claim 1, further comprising:

obtaining, by using the AI/ML, parameters associated with an RRM relaxation criterion or the RRM relaxation criterion itself; and
performing the relaxed RRM measurement or the normal RRM measurement based on the obtained parameters associated with the RRM relaxation criterion or the obtained RRM relaxation criterion itself.

**4.** The method of claim 3, wherein the parameters associated with the RRM relaxation criterion include at least one of:

parameters indicating a measurement-related threshold for a serving cell; or
parameters included in the configuration information related to the AI/ML-based RRM.

**5.** The method of claim 1, further comprising:

obtaining, by using the AI/ML, information indicating whether to perform RRM relaxation; and
performing the relaxed RRM measurement or the normal RRM measurement, based on the obtained information indicating whether to perform the RRM relaxation.

**6.** The method of claim 1, further comprising:

obtaining, by using the AI/ML, information related to an RRM relaxation method, wherein the information related to the RRM relaxation method includes at least one of information about a measurement period, information about a measurement frequency, or information about a relaxation activation time interval;
performing, in response to successfully obtaining the information related to the RRM relaxation method, the relaxed RRM measurement based on the obtained information related to the RRM relaxation method; and
performing, in response to failing to obtain the information related to the RRM relaxation method, the normal RRM measurement.

**7.** The method of any one of claims 1 to 6, wherein the UE is in an inactive state or an idle state, and
the obtaining, from the base station, of the configuration information related to the AI/ML-based RRM relaxation comprises obtaining, from the base station, system information including the configuration information related to the AI/ML-based RRM relaxation.

**8.** The method of any one of claims 1 to 5, wherein the UE is in a connected state, and
the obtaining, from the base station, of the configuration information related to the AI/ML-based RRM relaxation further comprises:

transmitting, to the base station, UE capability information including information about a capability related to the AL/ML-based RRM relaxation; and
receiving, from the base station, a radio resource control (RRC) reconfiguration message including the configuration information related to the AI/ML-based RRM relaxation.

**9.** The method of claim 1, further comprising, in case of performing the relaxed RRM measurement, transmitting, to the base station, information indicating that the relaxed RRM measurement has been performed, through a measurement report, a radio link failure (RLF) report, or a handover failure (HOF) report.

**10.** The method of claim 1, wherein information related to an RRM relaxation method to be applied when performing the relaxed RRM measurement is determined based on which of the at least one RRM relaxation criterion is fulfilled, and the information related to the RRM relaxation method includes at least one of information about a measurement period, information about a measurement frequency, or information about a relaxation activation time interval.

**11.** The method of claim 1, wherein, when obtaining information by using the AI/ML, accuracy of the obtained information is derived, and
the method further comprises, in response to the accuracy exceeding a specific threshold, performing the relaxed RRM measurement based on the information obtained by using the AI/ML.

**12.** A user equipment (UE) in a wireless communication system, the UE comprising:

a memory storing one or more instructions; and
at least one processor,
wherein the at least one processor is configured to execute the one or more instructions stored in the memory to:

obtain, from a base station, configuration information related to artificial intelligence/machine learning (AI/ML)-based radio resource measurement (RRM) relaxation;
obtain, by using AI/ML, information including a predicted cell measurement result;
determine, based on the information including the predicted cell measurement result, whether at least one RRM relaxation criterion is fulfilled; and
perform, based on the determining, relaxed RRM measurement or normal RRM measurement.

**13.** The UE of claim 12, wherein the at least one processor is further configured to execute the one or more instructions stored in the memory to receive, from the base station, information indicating whether performing the AI/ML-based RRM relaxation is allowed.

**14.** A method performed by a base station in a wireless communication system, the method comprising:

broadcasting configuration information related to artificial intelligence/machine learning (AI/ML)-based radio resource measurement (RRM) relaxation to a user equipment (UE) through system information, or transmitting the configuration information to the UE through a radio resource control (RRC) reconfiguration message; and

receiving, from the UE, at least one of: information including a cell measurement result predicted by using AI/ML; parameters associated with an RRM relaxation criterion predicted by using the AI/ML; or information indicating that relaxed RRM measurement has been performed.

**15.** A base station in a wireless communication system, the base station comprising:

a memory storing one or more instructions; and
at least one processor,
wherein the at least one processor is configured to execute the one or more instructions stored in the memory to:

broadcast configuration information related to artificial intelligence/machine learning (AI/ML)-based radio resource measurement (RRM) relaxation to a user equipment (UE) through system information, or transmit the configuration information to the UE through a radio resource control (RRC) reconfiguration message; and
receive, from the UE, at least one of: information including a cell measurement result predicted by using AI/ML; parameters associated with an RRM relaxation criterion predicted by using the AI/ML; or information indicating that relaxed RRM measurement has been performed.

# FIG. 1A

1a-05
1a-25
AMF
MME
1a-30
1a-10
1a-20
1a-35
gNB
gNB
1a-15
NR UE

FIG. 1B

1b-05
NR RRC_CONNECTED
1b-10
Resume/Release
with suspend
1b-15
NR RRC_INACTIVE
1b-25
Establishment
/Release
1b-20
Release
1b-30
NR RRC_IDLE

# FIG. 1C

UE operation
1c-00
Receive cell reselection priority information for frequencies through SIB
1c-05
Determine whether priority information for frequency of serving cell on which terminal currently camps exists
NO
1c-10
Regard priority of frequency of serving cell on which terminal currently camps, as lowest level
YES
1c-15
Apply priority information for each frequency provided from SIB
1c-20
Determine whether UE-specific cell reselection priority information has been received through RRC release message
NO
Camped on any cell state
YES
1c-25
Start first timer based on RRC release message
1c-30
Determine whether UE idle state is 'camped on any cell state' or 'camped normally state'
Camped normally
1c-35
Determine whether at least one of three conditions is met
YES
1c-40
Discard priority information provided from RRCRelease message
NO
1c-45
Apply priority information provided from RRCRelease message
Three conditions:
- Terminal transitions to connected mode
- The first timer expires
- PLMN selection is performed at request of NAS

# FIG. 1D

1d-35
Threshx-high
1d-10
Cell of frequency
with high priority
1d-05
Serving cell
1d-25
SintraSearch
SnonintraSearch
1d-30
1d-00
Cell of frequency
with low priority
SnonintraSearch
1d-20
1d-15
Threshx-low

FIG. 1E

UE
gNB
1e-05
SIB
(Relaxation criteria)
1e-10
Camp on the cell while
RRC_IDLE or RRC_INACTIVE
1e-15
Determine whether relaxation
criteria are fulfilled
1e-20
When relaxation criteria are fulfilled,
perform relaxed RRM measurement;
when relaxation criteria are not fulfilled,
perform normal RRM measurement

# FIG. 1F

UE operation
1f-05
Receive SIB including configuration information for RRM measurement relaxation
1f-10
Camp on serving cell
1f-15
Determine whether relaxation criteria are fulfilled, based on RRM measurement relaxation configuration information
YES
NO
1f-20
When relaxation criteria are fulfilled, perform relaxed RRM measurement
1f-25
When relaxation criteria are not fulfilled, perform normal RRM measurement

# FIG. 1G

UE
gNB
1g-05
SIB (Relaxation criteria + Allow prediction based RRM Relaxation)
1g-10
Camp on the cell while RRC_IDLE or RRC_INACTIVE
1g-15
Execute AI/ML model to derive predicted future cell measurement result
1g-20
Determine whether relaxation criteria are fulfilled, based on predicted cell measurement result
1g-25
When relaxation criteria are fulfilled, terminal performs relaxed RRM measurement; when relaxation criteria are not fulfilled, terminal performs normal RRM measurement

# FIG. 1H

UE
gNB
1h-05
SIB (Relaxation criteria + Allow criteria parameter update/determination)
1h-10
Camp on the cell while RRC_IDLE or RRC_INACTIVE
1h-15
Execute AI/ML model to derive relaxation criterion parameters to be used for RRM relaxation
1h-20
Determine whether to perform RRM relaxation, based on derived relaxation criterion and/or derived relaxation criterion parameters
1h-25
When relaxation criteria are fulfilled, terminal performs relaxed RRM measurement; when relaxation criteria are not fulfilled, terminal performs normal RRM measurement

# FIG. 1I

UE
gNB
1i-05
SIB
(Allow usage of AI/ML-based criteria)
1i-10
Camp on the cell while
RRC_IDLE or RRC_INACTIVE
1i-15
Execute AI/ML model to derive whether
to perform RRM relaxation
1i-20
Perform relaxed RRM measurement or normal
RRM measurement according to derivation
result on whether to perform RRM relaxation

# FIG. 1J

UE
gNB
1j-05
SIB (Relaxation criteria +
Allow relaxation method adaptation)
1j-10
Camp on the cell while
RRC_IDLE or RRC_INACTIVE
1j-15
Determine whether relaxation criteria are
fulfilled, based on RRM measurement
relaxation configuration information
1j-20
When relaxation criteria are fulfilled, execute
AI/ML model to derive degree and/or
method of relaxation to be used
1j-25
When relaxation method is successfully
derived by executing AI/ML model, perform
relaxed RRM measurement; when failing to
derive relaxation method, perform
normal RRM measurement

# FIG. 1K

UE
gNB
1k-05
RRC_CONNECTED
1k-07
UECapability
RRCReconfiguration
(s-MeasureConfig)
1k-10
1k-15
Determine whether s-MeasureConfig condition is met
1k-20
When s-MeasureConfig condition is not met, perform cell measurement for corresponding neighbor cell(s); when condition is met, refrain from cell measurement for corresponding neighbor cell(s)
1k-25
Measurement report (including measurement results that have met s-MeasureConfig condition)

# FIG. 1L

UE operation
1l-05
Receive system information
1l-10
Camp on corresponding cell
1l-15
Establish RRC connection with base station and transition to connected mode
1l-17
Receive UE capability enquiry message from base station, and then transmit information about capability of terminal to base station through UE capability information message
1l-20
Receive RRC Reconfiguration message (including s-MeasureConfig) from base station
1l-25
Compare signal measurement value for serving cell (or SpCell) with configured s-MeasureConfig
YES
NO
1l-30
When measurement value for serving cell or SpCell is less than configured s-MeasureConfig, perform cell measurement for corresponding neighbor cell(s)
1l-35
When measurement value for serving cell or SpCell is not less than configured s-MeasureConfig, refrain from cell measurement for corresponding neighbor cell(s)

# FIG. 1M

UE
gNB
1m-05
RRC_CONNECTED
1m-07
UECapability
1m-10
RRCReconfiguration
(s-MeasureConfig + Allow prediction
based RRM relaxation)
1m-15
Execute AI/ML model to derive predicted
future cell measurement result
1m-20
Compare s-MeasureConfig condition
based on predicted cell measurement result
1m-25
When s-MeasureConfig condition is not met,
perform cell measurement for corresponding
neighbor cell(s); when s-MeasureConfig
condition is met, refrain from cell
measurement for corresponding
neighbor cell(s)
1m-30
Measurement report (including
measurement results that have
met s-MeasureConfig condition)

# FIG. 1N

UE
gNB
1n-05
RRC_CONNECTED
1n-07
UECapability
1n-10
RRCReconfiguration
(s-MeasureConfig + Allow
s-MeasureConfig update/determination)
1n-15
Execute AI/ML model to derive
s-MeasureConfig value
1n-20
Compare s-MeasureConfig condition based on
s-MeasureConfig derived by executing
AI/ML model
1n-25
When s-MeasureConfig condition is not met,
perform cell measurement for corresponding
neighbor cell(s); when s-MeasureConfig
condition is met, refrain from cell
measurement for corresponding
neighbor cell(s)
1n-30
Measurement report (including
measurement results that have met
s-MeasureConfig condition)

# FIG. 10

UE
gNB
1o-05
RRC_CONNECTED
1o-07
UECapability
1o-10
RRCReconfiguration
(Allow usage of AI/ML-based criteria)
1o-15
Execute AI/ML model to derive whether to perform RRM relaxation
1o-20
Perform or refrain from cell measurement for neighbor cell(s) according to derivation result on whether to perform RRM relaxation
1o-25
Measurement report (including measurement results that have met RRM relaxation condition)

# FIG. 1P

UE
gNB
1p-05
RRC_CONNECTED
1p-07
UECapability
1p-10
RRCReconfiguration
(Meaurement configuration 1)(Relaxation criteria)
1p-15
Determine whether relaxation criteria are fulfilled
1p-20
Fulfillment reporting (indicating fullfilled vs not)
1p-25
RRCReconfiguration
(Meaurement configuration 2)
Option 1
1p-30
Perform (relaxed measurement. vs. normal measurement)
Option 2

# FIG. 1Q

UE operation
1q-05
Receiving SIB
1q-10
Camp on
1q-15
RRC connection establishment
1q-17
Exchanging UE capability
1q-20
Receiving RRCReconfiguration
(Meaurement configuration 1)(Relaxation criteria)
1q-25
YES
NO
Relaxation criteria is fulfilled?
1q-30
Option 1: Report to base station that relaxation criteria are fulfilled
Option 2: Perform relaxed measurement
1q-35
Option 1: Report to base station that the relaxation criteria are not fulfilled
Option 2: Perform normal measurement

# FIG. 1R

UE
gNB
1r-05
RRC_CONNECTED
1r-07
UECapability
1r-10
RRCReconfiguration
(Meaurement configuration 1) (Relaxation criteria + Allow prediction based RRM relaxation)
1r-15
Execute AI/ML model to derive predicted future cell measurement result
1r-20
Determine whether relaxation criteria are fulfilled, based on predicted cell measurement result
1r-25
Fulfillment reporting (indicating fullfilled vs not)
1r-30
RRCReconfiguration
(Meaurement configuration 2)
Option 1
1r-35
Perform (relaxed measurement. vs. normal measurement)
Option 2

# FIG. 1S

1s-00
1s-40
CONTROLLER
1s-42
MULTI-
CONNECTIVITY
PROCESSOR
1s-20
BASEBAND
PROCESSOR
1s-10
RF
PROCESSOR
1s-30
STORAGE

FIG. 1T

1t-00
1t-10
RF PROCESSOR
1t-20
BASEBAND PROCESSOR
1t-50
CONTROLLER
1t-52
MULTI-CONNECTIVITY PROCESSOR
1t-30
BACKHAUL COMMUNICATION UNIT
1t-40
STORAGE

## INTERNATIONAL SEARCH REPORT

International application No.
**PCT/KR2025/095054**

**A. CLASSIFICATION OF SUBJECT MATTER**

**H04W 24/08**(2009.01)i; **H04B 17/309**(2015.01)i; **H04L 41/16**(2022.01)i; **G06N 20/00**(2019.01)i; **H04W 8/24**(2009.01)i; **H04W 52/02**(2009.01)i

According to International Patent Classification (IPC) or to both national classification and IPC

**B. FIELDS SEARCHED**

Minimum documentation searched (classification system followed by classification symbols)

H04W 24/08(2009.01); G06N 3/04(2006.01); H04L 5/00(2006.01); H04W 24/10(2009.01); H04W 36/30(2009.01); H04W 36/32(2009.01); H04W 72/12(2009.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AI/ML, RRM relaxation, predicted, cell measurement result, condition, relaxed RRM measurement, normal RRM measurement, permission, parameter, inactive, idle, UE capability information, RLF report, HOF report

**C. DOCUMENTS CONSIDERED TO BE RELEVANT**

| Category* | Citation of document, with indication, where appropriate, of the relevant passages | Relevant to claim No. |
|---|---|---|
| X | US 2023-0413152 A1 (QUALCOMM INCORPORATED) 21 December 2023 (2023-12-21) See paragraphs [0063]-[0159]; claim 28; and figures 8-9. | 14-15 |
| Y | | 1-13 |
| Y | US 2022-0167370 A1 (VIVO MOBILE COMMUNICATION CO., LTD.) 26 May 2022 (2022-05-26) See paragraphs [0173] and [0178]; and claims 1 and 3. | 1-13 |
| Y | US 2022-0400373 A1 (QUALCOMM INCORPORATED) 15 December 2022 (2022-12-15) See claims 1 and 14. | 8 |
| Y | WO 2024-035641 A1 (INTERDIGITAL PATENT HOLDINGS, INC.) 15 February 2024 (2024-02-15) See claim 1. | 11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 June 2025** | **24 June 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2025/095054**

**C. DOCUMENTS CONSIDERED TO BE RELEVANT**

| Category* | Citation of document, with indication, where appropriate, of the relevant passages | Relevant to claim No. |
|---|---|---|
| A | US 2023-0078923 A1 (LENOVO (BEIJING) LTD.) 16 March 2023 (2023-03-16) See paragraphs [0007]-[0133]; and figures 1-8. | 1-15 |

Form PCT/ISA/210 (second sheet) (July 2022)

**INTERNATIONAL SEARCH REPORT**
**Information on patent family members**

International application No.
**PCT/KR2025/095054**

| Patent document cited in search report | Publication date (day/month/year) | Patent family member(s) | Publication date (day/month/year) |
|---|---|---|---|
| US 2023-0413152 A1 | 21 December 2023 | CN 119343959 A | 21 January 2025 |
| | | US 12238602 B2 | 25 February 2025 |
| | | WO 2023-249778 A1 | 28 December 2023 |
| US 2022-0167370 A1 | 26 May 2022 | BR 112022002675 A2 | 03 May 2022 |
| | | CN 111800800 A | 20 October 2020 |
| | | CN 111800800 B | 08 February 2022 |
| | | EP 4017069 A1 | 22 June 2022 |
| | | EP 4017069 B1 | 30 April 2025 |
| | | JP 2022-543902 A | 14 October 2022 |
| | | JP 7461457 B2 | 03 April 2024 |
| | | KR 10-2022-0046599 A | 14 April 2022 |
| | | US 12185351 B2 | 31 December 2024 |
| | | US 2025-0081225 A1 | 06 March 2025 |
| | | WO 2021-027930 A1 | 18 February 2021 |
| US 2022-0400373 A1 | 15 December 2022 | CN 117441325 A | 23 January 2024 |
| | | EP 4356582 A1 | 24 April 2024 |
| | | US 12089291 B2 | 10 September 2024 |
| | | WO 2022-266582 A1 | 22 December 2022 |
| WO 2024-035641 A1 | 15 February 2024 | None | |
| US 2023-0078923 A1 | 16 March 2023 | WO 2021-168754 A1 | 02 September 2021 |

Form PCT/ISA/210 (patent family annex) (July 2022)